(19) Europäisches Patentamt
European Patent Office
Office européen des brevets

(11) **EP 4 560 830 A1**

(12) **EUROPEAN PATENT APPLICATION**
published in accordance with Art. 153(4) EPC

(43) Date of publication:
**28.05.2025 Bulletin 2025/22**

(21) Application number: **23857556.7**

(22) Date of filing: **11.07.2023**

(51) International Patent Classification (IPC):
*H01Q 1/38* (2006.01)     *H01Q 1/24* (2006.01)
*H01Q 5/25* (2015.01)

(52) Cooperative Patent Classification (CPC):
**H01Q 1/24; H01Q 1/38; H01Q 5/25**

(86) International application number:
**PCT/KR2023/009822**

(87) International publication number:
**WO 2024/043518 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.08.2022 KR 20220105279
02.09.2022 KR 20220111685**

(71) Applicant: **Samsung Electronics Co., Ltd.
Suwon-si, Gyeonggi-do 16677 (KR)**

(72) Inventors:
• **KIM, Junggil
  Suwon-si Gyeonggi-do 16677 (KR)**
• **KIM, Taeil
  Suwon-si Gyeonggi-do 16677 (KR)**
• **PARK, Hogon
  Suwon-si Gyeonggi-do 16677 (KR)**

(74) Representative: **HGF
  HGF Limited
  1 City Walk
  Leeds LS11 9DX (GB)**

(54) **ANTENNA STRUCTURE AND ELECTRONIC DEVICE COMPRISING SAME**

(57)     According to an embodiment of the present disclosure, an electronic device may comprise: a housing; a circuit board disposed within the housing; an antenna disposed on the circuit board and including a first antenna, a second antenna spaced apart from the first antenna, and a third antenna spaced farther apart from the first antenna than the second antenna; and at least one processor. The processor of the electronic device may be configured to identify the direction of an external electronic device on the basis of the antenna. Various other embodiments may also be possible.

FIG. 9

EP 4 560 830 A1

## Description

[Technical Field]

Various embodiments disclosed in this document relate to electronic devices and, specifically, to an antenna structure and an electronic device including the same.

[Background Art]

The remarkable development of information and communication technology and semiconductor technology is accelerating an increase in distribution and use of various electronic devices. In particular, recent electronic devices are being developed to be portable and to communicate with each other.

Electronic devices may indicate devices that perform specific functions depending on the programs installed, such as home appliances, electronic notebooks, portable multimedia players, mobile communication terminals, tablet PCs, video/audio devices, desktop/laptop computers, and vehicle navigation systems. For example, these electronic devices may output stored information as sound or images. As the integration of electronic devices increases and as ultra-high-speed and large-capacity wireless communication becomes widespread, various functions may be installed in a single electronic device such as a mobile communication terminal. For example, in addition to communication functions, entertainment functions such as games, multimedia functions such as music/video playback, communication and security functions such as mobile banking, and functions such as schedule management and electronic wallets are being integrated into a single electronic device. These electronic devices are being miniaturized so that users are able to conveniently carry them.

[Detailed Description of the Invention]

[Technical Solution]

According to an embodiment of the disclosure, an electronic device may include a housing, a circuit board, an antenna, and at least one processor. The circuit board may be disposed inside the housing. The antenna may be disposed on the circuit board. The antenna may include a first antenna, a second antenna, and a third antenna. The second antenna may be spaced apart from the first antenna. The third antenna may be spaced farther apart from the first antenna than the second antenna. The at least one processor may be configured to obtain a plurality of first angle-of-arrival values defined as a direction of an external electronic device relative to the electronic device, based on a first phase difference of arrival (first PDoA) of a signal of the external electronic device received through the first antenna and the third antenna. The at least one processor may be configured to obtain a second angle-of-arrival value defined as a direction of the external electronic device relative to the electronic device, based on a second phase difference of arrival (second PDoA) of a signal of the external electronic device received through the first antenna and the second antenna. The at least one processor may be configured to identify a value, which is closest to the second angle-of-arrival value, among the plurality of first angle-of-arrival values, as an angle-of-arrival of the external electronic device.

According to an embodiment of the disclosure, an electronic device may include a housing, a circuit board, an antenna, and at least one processor. The circuit board may be disposed inside the housing. The antenna may be disposed on the circuit board. The antenna may include a first antenna, a second antenna, and a third antenna. The second antenna may be spaced by a first distance apart from the first antenna. The third antenna may be spaced by a second distance greater than the first distance apart from the first antenna. The at least one processor may be configured to obtain a plurality of first angle-of-arrival values defined as a direction of an external electronic device relative to the electronic device, based on two antennas among the first antenna, the second antenna, or the third antenna. The at least one processor may be configured to obtain one second angle-of-arrival value defined as a direction of the external electronic device relative to the electronic device, based on the remaining antenna. The at least one processor may be configured to identify a value, which is closest to the second angle-of-arrival value, among the plurality of first angle-of-arrival values, as an angle-of-arrival of the external electronic device.

[Brief Description of Drawings]

FIG. 1 is a block diagram of an electronic device in a network environment according to various embodiments.
FIGS. 2A to 2B are flowcharts illustrating a distance measurement process based on UWB communication according to an embodiment of the disclosure.
FIG. 2C is a diagram illustrating a direction measurement process based on reception of a UWB signal according to an embodiment of the disclosure.
FIG. 3 is a front perspective view of an electronic device according to an embodiment of the disclosure.
FIG. 4 is a rear perspective view of an electronic device according to an embodiment of the disclosure.
FIG. 5 is an exploded perspective view of an electronic device according to an embodiment of the disclosure.
FIG. 6 is a diagram illustrating an antenna module of an electronic device according to an embodiment of the disclosure.

FIG. 7 is a flowchart illustrating a method for measuring an angle-of-arrival of an external electronic device relative to an electronic device according to an embodiment of the disclosure.

FIG. 8A is a graph showing an angle-of-arrival of an external electronic device obtained based on a phase difference of arrival (PDoA) measured through a first antenna and a third antenna according to an embodiment of the disclosure.

FIG. 8B is a graph showing an angle-of-arrival of an external electronic device obtained based on a phase difference of arrival (PDoA) measured through a first antenna and a second antenna according to an embodiment of the disclosure.

FIG. 9 is a diagram illustrating an antenna module of an electronic device according to an embodiment of the disclosure.

FIG. 10A is a diagram illustrating an antenna module of an electronic device according to an embodiment of the disclosure.

FIG. 10B is a diagram illustrating an antenna module of an electronic device according to an embodiment of the disclosure.

FIG. 10C is a diagram illustrating an antenna module of an electronic device according to an embodiment of the disclosure.

FIG. 11 is a diagram illustrating an unfolded state of an electronic device according to an embodiment of the disclosure.

FIG. 12 is a diagram illustrating a folded state of an electronic device according to an embodiment of the disclosure.

FIG. 13 is an exploded perspective view of an electronic device according to an embodiment of the disclosure.

FIG. 14 is a diagram illustrating an antenna module of an electronic device according to an embodiment of the disclosure.

FIG. 15 is a diagram illustrating an electronic device in a closed state according to an embodiment of the disclosure.

FIG. 16 is a diagram illustrating an electronic device in an open state according to an embodiment of the disclosure.

FIG. 17 is an exploded perspective view of an electronic device according to an embodiment of the disclosure.

FIG. 18A is a diagram illustrating an antenna module of an electronic device according to an embodiment of the disclosure.

FIG. 18B is a diagram illustrating an antenna module of an electronic device according to an embodiment of the disclosure.

[Mode for Carrying out the Invention]

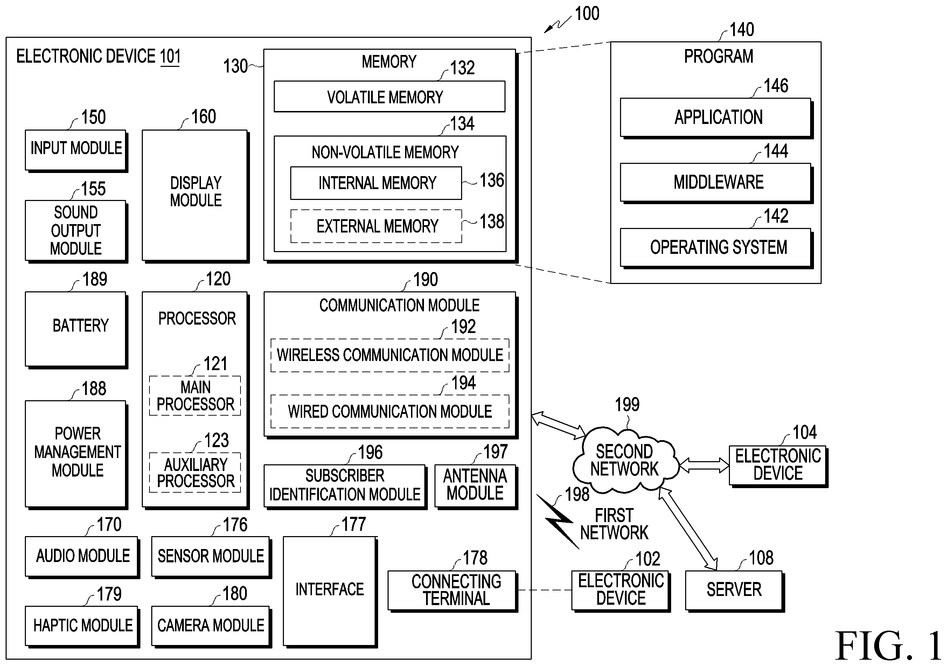

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

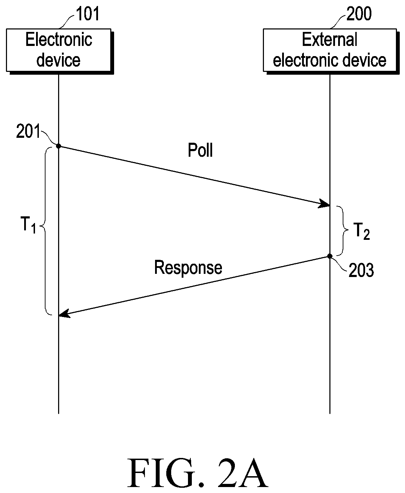

FIGS. 2A to 2B are flowcharts illustrating a distance measurement process based on UWB communication according to an embodiment of the disclosure.

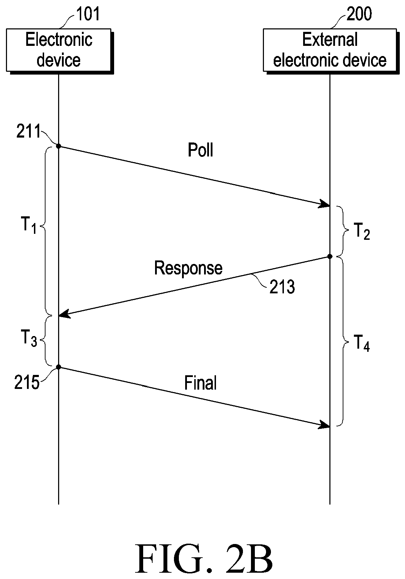

The embodiments in FIGS. 2A to 2B may be combined with the embodiments in FIG. 1, FIG. 2C, or FIGS. 3 to 18B. The embodiment in FIG. 2A may be combined with the embodiment in FIG. 2B.

An electronic device 101 and/or an external electronic device 200 illustrated in FIGS. 2A to 2B may be electronic devices supporting ultra-wideband (UWB) communication.

Hereinafter, with respect to the description of the operation of the electronic device 101 or the external electronic device 200 using UWB, the operation of the external electronic device 200 may be performed by the electronic device 101, and the operation of the electronic device 101 may be performed by the external electronic device 200.

Referring to FIG. 2A, the electronic device 101 (e.g., the electronic device 101 in FIG. 1) may include a processor (e.g., the processor 120 in FIG. 1) and/or a communication module (e.g., the communication module 190 in FIG. 1).

Referring to FIG. 2A, the electronic device 101 may identify a distance to the external electronic device 200 (e.g., the electronic device 102 or the electronic device 104 in FIG. 1) based on a single sided-two way ranging (SS-TWR) method.

In operation 201, the electronic device 101 may transmit a poll message (e.g., ranging poll). For example, the communication module (e.g., the communication module 190 in FIG. 1) of the electronic device 101 may include an ultra-wideband (UWB) communication module, and the UWB communication module may transmit a poll message. The external electronic device 200 may receive the poll message and, in response thereto, transmit a response message (e.g., ranging response) in operation 203. In order to receive the poll message and transmit the response message corresponding to the poll message, the external electronic device 200 may consume a second time T2, and the second time may be named as, for example, a process time. The external electronic device 200 may include information about the process time, for example, the second time T2, in the response message and transmit the same to the electronic device 101.

According to an embodiment, the electronic device 101 may identify the distance between the electronic device 101 and the external electronic device 200, based on the time of transmitting the poll message, the time of receiving the response message, and the process time (e.g., the second time T2) included in the response message. For example, if the difference between the time of transmitting the poll message and the time of receiving the response message is a first time T1, the electronic device 101 may identify $((T1-T2)/2)*(c)$ (where c is the speed of light) as the distance between the electronic device 101 and the external electronic device 200.

Referring to FIG. 2B, the electronic device 101 (e.g., the electronic device 101 in FIG. 1) may include a processor (e.g., the processor 120 in FIG. 1) and/or a communication module (e.g., the communication module 190 in FIG. 1).

Referring to FIG. 2B, the electronic device 101 may identify the distance to the external electronic device 200 based on a double sided-two way ranging (DS-TWR) method. The electronic device 101 may transmit a poll message in operation 211. For example, the communication module 190 may include an ultra-wideband (UWB) communication module, and the UWB communication module may transmit a poll message. The external electronic device 200 may receive the poll message and transmit a response message in response to the poll message in operation 213. In order to receive the poll message and transmit the response message in response to the poll message, the external electronic device 200 may consume a process time of a second time T2. The external electronic device 200 may include information about the process time, for example, the second time T2, in the response message and transmit the same to the electronic device 101.

According to an embodiment, the electronic device 101 may transmit a final message (e.g., ranging final), based on the reception of the response message, in operation 215. For example, in order to receive the response message and transmit the final message in response to the response message, the electronic device 101 may consume a process time of a third time T3. The electronic device 101 may include information about the process time, for example, the third time T3, in the final message and transmit the same to the external electronic device 200.

According to an embodiment, the electronic device 101 may identify the distance between the electronic device 101 and the external electronic device 200, based on the time of transmitting the poll message, the time of receiving the response message, and the process time (e.g., the second time T2) included in the response message.

For example, if the difference between the time of transmitting the poll message and the time of receiving the response message is the first time T1, the electronic device 101 may identify ((T1-T2)/2)*(c) (where c is the speed of light) as the distance between the electronic device 101 and the external electronic device 200.

The external electronic device 200 according to an embodiment may identify the distance between the electronic device 101 and the external electronic device 200, based on the time of transmitting the response message, the time of receiving the final message, and the process time (e.g., the third time T3) included in the final message. For example, if the difference between the time of transmitting the response message and the time of receiving the final message is a fourth time T4, the external electronic device 200 may identify ((T4-T3)/2)*(c) (where c is the speed of light) as the distance between the electronic device 101 and the external electronic device 200.

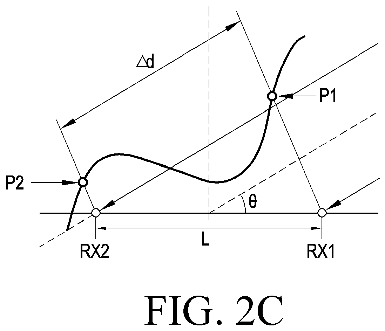

FIG. 2C is a diagram illustrating a direction measurement process based on reception of a UWB signal according to an embodiment of the disclosure.

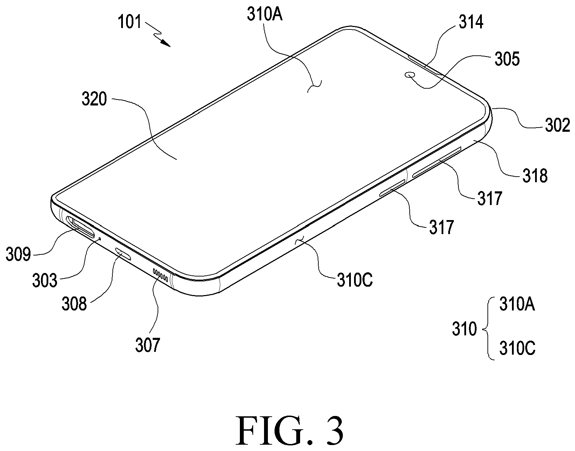

The embodiment in FIG. 2C may be combined with the embodiments in FIGS. 1 to 2B or the embodiments in FIGS. 3 to 18B.

The configuration of the electronic device 101 in FIG. 2C may be partially or entirely the same as the configuration of the electronic device 101 in FIGS. 1 to 2B.

Referring to FIG. 2C, an electronic device 101 (e.g., the electronic device 101 in FIGS. 1 to 2B) may include a processor (e.g., the processor 120 in FIG. 1), a communication module (e.g., the communication module 190 in FIG. 1), and/or at least two receiving antennas RX1 and RX2 (e.g., the antenna module 197 in FIG. 1).

According to an embodiment, the electronic device 101 may support ultra-wideband (UWB) communication of at least two receiving antennas RX1 and RX2 using the communication module (e.g., a UWB communication module) of the electronic device 101. Two receiving antennas RX1 and RX2 may be arranged to have antenna distance L. According to an embodiment, information about the antenna distance L may be stored in memory (e.g., the memory 130 in FIG. 1) of the electronic device 101.

According to an embodiment, the electronic device 101 may identify the direction (or position) of an external electronic device (e.g., the external electronic device 200 in FIGS. 2A to 2B) relative to the electronic device 101, based on an angle-of-arrival (AOA) method.

According to an embodiment, the electronic device 101 may identify the direction (or position) of the external electronic device (e.g., the external electronic device 200 in FIGS. 2A to 2B), based on an angle (e.g., angle-of-arrival) at which the electronic device 101 receives a signal (e.g., a signal for UWB communication) transmitted from the external electronic device. For example, the direction (or position) information of the external electronic device relative to the electronic device 101 may be defined as the angle-of-arrival θ.

According to an embodiment, if the external electronic device (e.g., the electronic device 200 in FIGS. 2A to 2B) is positioned in the direction of angle-of-arrival θ relative to an electronic device 101, a signal transmitted from the external electronic device may be received by two receiving antennas RX1 and RX2. At this time, there may be a difference in signal reception time and a phase difference between the signals at the respective receiving antennas RX1 and RX2 due to the antenna distance L of the two receiving antennas RX1 and RX2. For example, the phase of a signal received by a first receiving antenna RX1 may be P1, and the phase of a signal received by a second receiving antenna RX2 may be P2. The electronic device 101 may identify the angle-of-arrival θ at which the external electronic device 200 is positioned based on the phase difference between the phases respectively measured from two receiving antennas RX1 and RX2 (or the difference in the reception time measured from each of the two receiving antennas) and the antenna distance L.

According to an embodiment, the processor (e.g., the processor 120 in FIG. 1) of the electronic device 101, based on a phase difference of arrival (PDoA) of the signal, may identify a difference in the arrival distance of a signal (e.g., a signal for UWB communication) transmitted from a transmitting device of the external electronic device (e.g., the external electronic device 200 in FIGS. 2A to 2B) to a receiving device (e.g., two receiving antennas RX1 and RX2) of the electronic device 101. The processor of the electronic device 101, based on the identified difference in the arrival distance, may determine the angle-of-arrival θ indicating the angle at which the receiving device (e.g., two receiving antennas) of the electronic device 101 receives the signal from the transmitting device of the external electronic device.

For example, the processor of the electronic device 101 may determine the angle-of-arrival θ through Equation 1, Equation 2, and Equation 3 below.

[Equation 1]

$$\triangle P = \frac{2\pi}{\lambda} \cdot \triangle d$$

In Equation 1, △P is the phase difference of arrival (PDoA) of the signal of the external electronic device (e.g., a signal for UWB communication) received through two receiving antennas RX1 and RX2, and may be (P1-P2) or (P2-P1). △d may be the difference in the arrival distance of the signal of the external electronic device received through two receiving antennas RX1 and RX2. λ may be the wavelength of the signal for UWB communication. The processor of the electronic device 101 may determine the difference (△d) in the arrival distance of the signal through Equation 1 above.

$$[\text{Equation 2}]$$
$$\triangle d = L \cdot \cos\theta$$

$$[\text{Equation 3}]$$
$$\theta = \cos^{-1}\frac{\triangle d}{L} = \cos^{-1}\frac{\triangle P}{2\pi L/\lambda}$$

In Equation 2 and Equation 3, L may be the antenna distance L between two receiving antennas RX1 and RX2, and θ may be the angle-of-arrival. The processor of the electronic device 101 may obtain the angle-of-arrival θ, which is direction information of the external electronic device 200, through the relationship between the difference (△d) of the signal arrival distance obtained through Equation 1 above and Equation 2 to Equation 3.

The angle-of-arrival θ, which is the direction information of the external electronic device 200 identified through Equation 3 above, may theoretically be a value between -90 degrees and 90 degrees.

The electronic device 101, which will described below with reference to the subsequent drawings, may identify the angle-of-arrival θ of the external electronic device (e.g., the external electronic device 200 in FIGS. 2A to 2B) relative to the electronic device 101, based on the AOA method described as an example in FIG. 2C.

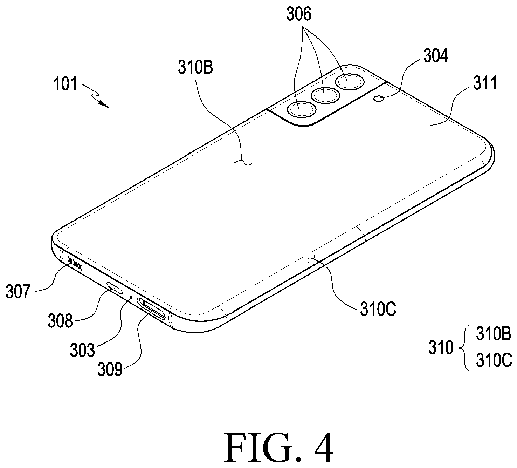

FIG. 3 is a front perspective view of an electronic device according to an embodiment of the disclosure. FIG. 4 is a rear perspective view of an electronic device according to an embodiment of the disclosure.

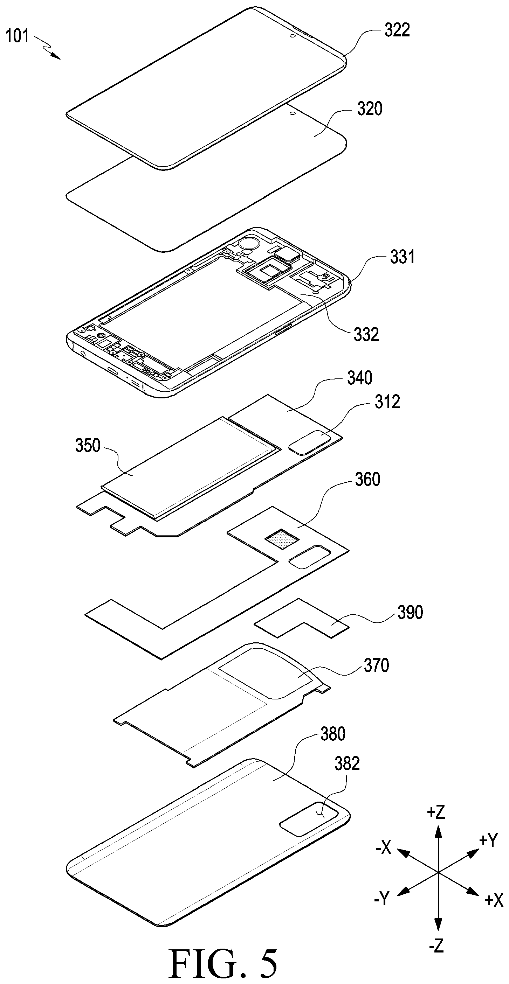

The embodiments in FIGS. 3 to 4 may be combined with the embodiments in FIGS. 1 to 2C or the embodiments in FIGS. 5 to 18B.

Referring to FIGS. 3 and 4, an electronic device 101 according to an embodiment may include a housing 310 including a front surface 310A, a rear surface 310B, and a side surface 310C surrounding a space between the front surface 310A and the rear surface 310B. In an embodiment, the housing 310 may also refer to a structure constituting some of the front surface 310A in FIG. 3, the rear surface 310B in FIG. 4, and the side surface 310C. For example, the housing 310 may include a front plate 302 and a rear plate 311. According to an embodiment, at least a portion of the front surface 310A may be formed by a substantially transparent front plate 302 (e.g., a glass plate including various coating layers, or a polymer plate). The rear surface 310B may be formed by a rear plate 311. The rear plate 311 may be formed by, for example, glass, ceramic, polymer, metal (e.g., titanium (Ti), stainless steel (STS), aluminum (Al), and/or magnesium (Mg)), or a combination of at least two of the above materials. The side surface 310C may be formed by a side bezel structure (or "side member") 318 that is coupled to the front plate 302 and the rear plate 311 and includes metal and/or polymer. In an embodiment, the rear plate 311 and the side bezel structure 318 may be formed integrally and include the same material (e.g., glass, metal such as aluminum, or ceramic). According to an embodiment, the front surface 310A and/or the front plate 302 may be regarded as a part of a display 320.

According to an embodiment, the electronic device 101 may include at least one of a display 320, audio modules 303, 307, and 314 (e.g., the audio module 170 in FIG. 1), a sensor module (e.g., the sensor module 176 in FIG. 1), camera modules 305 and 306 (e.g., the camera module 180 in FIG. 1), a key input device 317 (e.g., the input module 150 in FIG. 1), and connector holes 308 and 309 (e.g., the connection terminal 178 in FIG. 1). In an embodiment, the electronic device 101 may exclude at least one (e.g., the connector hole 309) of the components or further include other components. According to an embodiment, the display 320 may be visually exposed, for example, through a significant portion of the front plate 302.

According to an embodiment, the surface (or the front plate 302) of the housing 310 may include a screen display area formed as the display 320 is visually exposed. As an example, the screen display area may include the front surface 310A.

In an embodiment (not shown), the electronic device 101 may include a recess or opening formed in a portion of the screen display area (e.g., the front surface 310A) of the display 320, and may include at least one of an audio module 314, a sensor module (not shown), a light-emitting element (not shown), and a camera module 305 aligned with the recess or opening. In an embodiment (not shown), at least one of an audio module 314, a sensor module (not shown), a camera module 305, a fingerprint sensor (not shown), and a light-emitting element (not shown) may be included in the rear surface of the screen display area of the display 320.

In an embodiment (not shown), the display 320 may be coupled with or disposed adjacent to a touch detection circuit, a pressure sensor capable of measuring the intensity (pressure) of a touch, and/or a digitizer capable of detecting a magnetic field-type stylus pen.

In an embodiment, at least a portion of the key input device 317 may be disposed in the side bezel structure 318.

According to an embodiment, the audio modules 303, 307, and 314 may include, for example, a microphone hole 303 and speaker holes 307 and 314. The microphone hole 303 may have a microphone disposed therein for obtaining external sound, and in an embodiment, a plurality of microphones may be disposed to detect the direction of the sound. The speaker holes 307 and 314 may include an external speaker hole 307 and a receiver hole 314 for calls. In an embodiment, the speaker holes 307 and 314 and the microphone hole 303 may be implemented as one hole, or a speaker (e.g., a piezo speaker) may be provided without the speaker holes 307 and 314.

According to an embodiment, the sensor module (not shown) may generate, for example, an electrical signal or data value corresponding to an internal operating state of the electronic device 101 or an external environmental state. The sensor module (not shown) may include, for example, a first sensor module (not shown) (e.g., a proximity sensor) and/or a second sensor module (not shown) (e.g., a fingerprint sensor) disposed on the front surface 310A of the housing 310. The sensor module (not shown) may include a third sensor module (not shown) (e.g., an HRM sensor) and/or a fourth sensor module (not shown) (e.g., a fingerprint sensor) disposed on the rear surface 310B of the housing 310. In a certain embodiment (not shown), the fingerprint sensor may be disposed on the rear surface 310B as well as on the front surface 310A (e.g., the display 320) of the housing 310. The electronic device 101 may further include at least one of a non-illustrated sensor module, for example, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor (not shown).

According to an embodiment, the camera modules 305 and 306 may include, for example, a front camera module 305 disposed on the front surface 310A of the electronic device 101, a rear camera module 306 disposed on the rear surface 310B, and/or a flash 304. The camera modules 305 and 306 may include one or more lenses, an image sensor, and/or an image signal processor. The flash 304 may include, for example, a light-emitting diode or a xenon lamp. According to an embodiment, two or more lenses (infrared camera or wide-angle and telephoto lenses) and image sensors may be arranged on one side of the electronic device 101.

According to an embodiment, the key input device 317 may be disposed on the side surface 310C of the housing 310. In an embodiment, the electronic device 101 may exclude a part or entirety of the above-mentioned key input device 317, and other forms such as soft keys may be implemented for the excluded key input device 317 on the display 320.

According to an embodiment, the light-emitting element (not shown) may be disposed, for example, on the front surface 310A of the housing 310. The light-emitting element (not shown) may provide, for example, status information of the electronic device 101 in the form of light. In another embodiment, the light-emitting element (not shown) may provide, for example, a light source that is linked to the operation of the front camera module 305. The light-emitting element (not shown) may include, for example, an LED, an IR LED, and/or a xenon lamp.

According to an embodiment, the connector holes 308 and 309 may include, for example, a first connector hole 308 capable of receiving a connector (e.g., a USB connector) for transmitting and receiving power and/or data to and from an external electronic device or a connector (e.g., an earphone jack) for transmitting and receiving audio signals to and from an external electronic device, and/or a second connector hole 309 capable of receiving a storage device (e.g., a subscriber identification module (SIM) card). According to an embodiment, the first connector hole 308 and/or the second connector hole 309 may be omitted.

FIG. 5 is an exploded perspective view of an electronic device according to an embodiment of the disclosure.

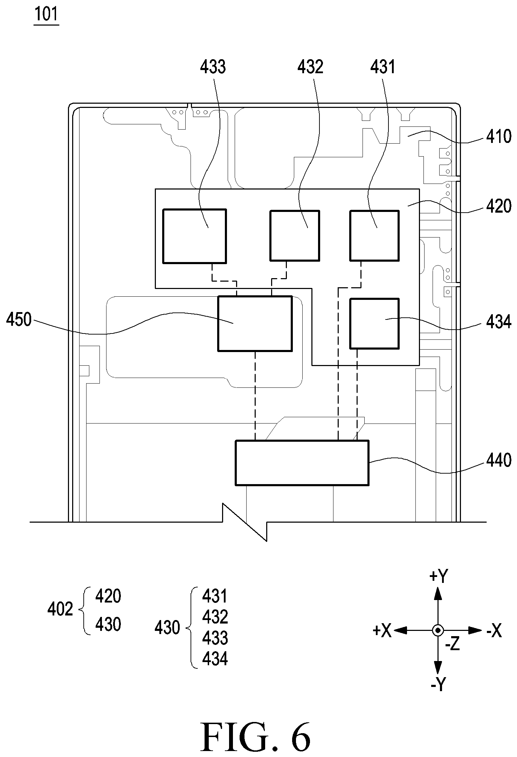

The embodiment in FIG. 5 may be combined with the embodiments in FIGS. 1 to 4 or the embodiments in FIGS. 6 to 18B.

Referring to FIG. 5, an electronic device 101 (e.g., the electronic device 101 in FIGS. 3 to 4) may include at least one of a front plate 322 (e.g., the front plate 302 in FIG. 3), a display 320 (e.g., the display 320 in FIG. 3), a support member 332 (e.g., a front support member), a printed circuit board 340, a battery 350, a rear case 360 (e.g., a rear support member), an antenna 370, a rear plate 380 (e.g., the rear plate 311 in FIG. 4), or an antenna module 390. According to an embodiment, the electronic device 101 may exclude at least one (e.g., the rear case 360) of the components or may further include other components. At least one of the components of the electronic device 101 may be identical or similar to at least one of the components of the electronic device 101 in FIG. 3 or FIG. 4, and a redundant description thereof will be omitted below.

According to an embodiment, the support member 332 may be disposed inside the electronic device 101 so as to be connected to the side bezel structure 331, or may be formed integrally with the side bezel structure 331. The support member 332 may be formed of, for example, a metal material and/or a non-metal (e.g., polymer) material. The support member 332 may have one side accommodating the display 320 and the other side accommodating a printed circuit board 340. The printed circuit board 340 may have a processor (e.g., the processor 120 in FIG. 1), memory (e.g., the memory 130 in FIG. 1), and/or an interface (e.g., the interface 177 in FIG. 1), which are mounted thereon.

According to an embodiment, the battery 350 is a device for supplying power to at least one component (e.g., camera module 312) of the electronic device 101, and may include, for example, a non-rechargeable primary battery, a rechargeable secondary battery, or a fuel cell. At least a portion of the battery 350 may be disposed substantially on the same plane as, for example, the printed circuit board 340. The battery 350 may be integrally disposed inside the electronic device 101, and may also be provided to be detachable from the electronic device 101.

According to an embodiment, the rear case 360 may be disposed between the printed circuit board 340 and the antenna 370. For example, the rear case 360 may include one side to which at least one of the printed circuit board 340 or the battery 350 is coupled, and the other side to which the antenna 370 is coupled.

According to an embodiment, the antenna 370 may be disposed between the rear plate 380 and the battery 350. The antenna 370 may include, for example, a near-field communication (NFC) antenna, a wireless charging antenna, and/or a magnetic secure transmission (MST) antenna. The antenna 370 may, for example, perform short-range communication with an external device or wirelessly transmit and receive power required for charging. For example, the antenna 370 may include a coil for wireless charging. According to an embodiment, the antenna structure may be formed by a part or a combination of the side bezel structure 331 and/or the support member 332.

According to an embodiment, the electronic device 101 may include a camera module 312 disposed inside a housing (e.g., the housing 310 in FIG. 3). According to an embodiment, the camera module 312 may be a rear camera module (e.g., the camera module 312 in FIG. 4) disposed on the support member 332 and capable of obtaining an image of a subject positioned at the rear (e.g., in the -Z direction) of the electronic device 101. According to an embodiment, at least a portion of the camera module 312 may be exposed to the outside of the electronic device 101 through an opening 382 formed in the rear plate 380.

The electronic device 101 disclosed in FIGS. 3 to 5 has a bar-type or plate-type appearance, but the disclosure is not limited thereto. For example, the illustrated electronic device may be a rollable electronic device or a foldable electronic device. The term "rollable electronic device" may indicate an electronic device in which a display (e.g., the display 320 in FIG. 5) is capable of bending deformation so that at least a portion thereof is wound or rolled or is received inside a housing (e.g., the housing 310 in FIG. 3). Depending on the user's needs, the rollable electronic device may be used by expanding the screen display area by unfolding the display or exposing a wider area of the display to the outside. The term "foldable electronic device" may indicate an electronic device in which a display is able to be folded so that two different areas of the display face each other or face opposite directions. In general, a display of a foldable electronic device may be folded in a portable state such that two different areas face each other or face opposite directions, and may be unfolded in an actual use state such that two different areas form a substantially flat form. In an embodiment, the electronic device 101 according to an embodiment disclosed in this document may be interpreted to encompass various other electronic devices such as laptop computers or home appliances, as well as portable electronic devices such as smartphones.

According to an embodiment, the electronic device 101 may further include an antenna module 390. The antenna module 390 may be defined as an ultra-wideband antenna module (UWB antenna module). According to an embodiment, the antenna module 390 may be defined as a millimeter wave (mmWave) antenna module.

According to an embodiment, the antenna module 390 may be provided to detect a position or direction of an external electronic device (e.g., the external electronic device 200 in FIGS. 2A to 2B) relative to the electronic device 101. According to an embodiment, the antenna module 390 may include a circuit board or an antenna arranged on the circuit board. The circuit board may be a printed circuit board (PCB) or a flexible PCB.

According to an embodiment, the antenna module 390 may be disposed on at least a portion of one side (e.g., the side facing in the -Z direction in FIG. 5) of the rear case 360. According to an embodiment, the antenna module 390 may be disposed between the rear case 360 and the rear plate 380. A plurality of antennas of the antenna module 390 may be disposed on a side of the circuit board facing the rear plate 380 (e.g., the side facing in the -Z direction in FIG. 5).

According to an embodiment, the circuit board of the antenna module 390 may be electrically connected to a printed circuit board 340 (e.g., a main PCB) through a connector. For example, the connector may be disposed on a flexible circuit board included in the antenna module 390, but is not limited thereto.

According to an embodiment, a shield can may be disposed on at least a portion of one side (e.g., the side facing in the -Z direction in FIG. 5) of the printed circuit board 360 so as to shield electrical components disposed on the printed circuit board 360. At least a portion of the shield can may face the rear case 360. The antenna module 390 may face the shield can with the rear case 360 disposed therebetween, but is not limited thereto. According to an embodiment, the antenna module 390 may be disposed adjacent to the antenna 370.

Hereinafter, a process or method for an electronic device 101 to detect the position or direction of an external electronic device, based on the antenna module 390, will be described with reference to FIGS. 6 to 18B.

FIG. 6 is a diagram illustrating an antenna module of an electronic device according to an embodiment of the disclosure.

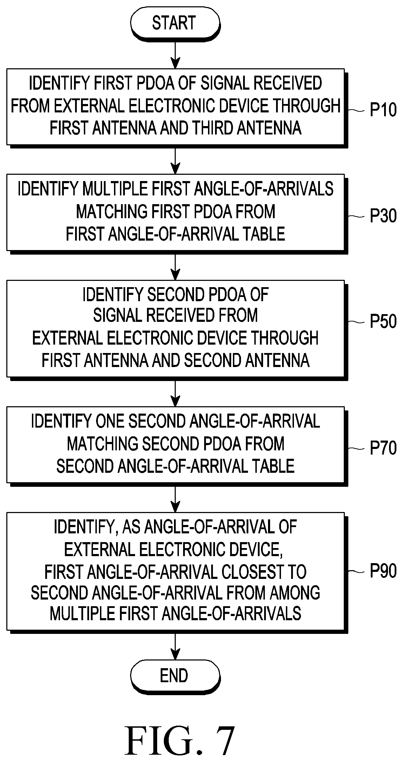

The embodiment in FIG. 6 may be combined with the embodiments in FIGS. 1 to 5 or the embodiments in FIGS. 7 to 18B.

Referring to FIG. 6, an electronic device 101 (e.g., the electronic device 101 in FIGS. 1 to 5) may include a housing 410, an antenna module 402, a processor 440, or a switching circuit 450. According to an embodiment, the antenna module 402 may include a circuit board 420 or an antenna 430.

The configuration of the housing 410 in FIG. 6 may be partially or entirely identical to the configuration of the housing 310 in FIGS. 3 to 4 or the configuration of the bracket 322 in FIG. 5. The configuration of the antenna module 402 in FIG. 6 may be partially or entirely identical to the configuration of the antenna 197 in FIG. 1 or the configuration of the antenna module 390 in FIG. 5. The configuration of the antenna 430 in FIG. 6 may be partially or entirely identical to the configuration of the antenna 197 in FIG. 1 or the configuration of two receiving antennas RX1 and RX2 in FIG. 2C. The configuration of the processor 440 in FIG. 6 may be partially or entirely identical to the configuration of the processor 120 in FIG. 1.

Referring to FIG. 6, an antenna module 402, a processor 440, or a switching circuit 450 may be disposed inside the housing 410.

According to an embodiment, the circuit board 420 may be disposed inside the housing 410. For example, the circuit board 420 may be disposed between a support member (e.g., the support member 332 in FIG. 5) and a rear plate (e.g., the rear plate 380 in FIG. 5).

According to an embodiment, the antenna 430 may be disposed or mounted on one side of the circuit board 420 (e.g., the side facing in the -Z direction in FIGS. 5 to 6). For example, the antenna module 430 may be disposed to face the rear plate (e.g., the rear plate 380 in FIG. 5).

According to an embodiment, a communication module (e.g., the communication module 190 in FIG. 1) and the antenna 430 may be connected so that the electronic device 101 may communicate with an external electronic device (e.g., the external electronic device 200 in FIGS. 2A to 2B). According to an embodiment, the processor 440 (e.g., the processor 120 in FIG. 1) of the electronic device 101, based on the AOA method described in FIG. 2C, may identify an angle-of-arrival (e.g., the angle-of-arrival θ in FIG. 2C) that is direction information of the external electronic device, through a signal of the external electronic device (e.g., a signal for UWB ultra-wideband communication) received through the antenna 430.

According to an embodiment, the antenna 430 may include a plurality of antennas 431, 432, 433, and 434. For example, the antenna 430 may include a first antenna 431, a second antenna 432, a third antenna 433, or a fourth antenna 434 configured to transmit and/or receive an RF signal (e.g., a UWB signal) in a frequency band of about 3 GHz to about 10 GHz. According to an embodiment, the first antenna 431, the second antenna 432, the third antenna 433, or the fourth antenna 434 may be disposed on substantially the same plane (e.g., a plane formed by the X-axis and the Y-axis in FIG. 6 or a plane parallel thereto), but is not limited thereto. In addition, the first antenna 431, the second antenna 432, the third antenna 433, or the fourth antenna 434 may be disposed on different circuit boards, as well as on the same circuit board 420. If the first antenna 431, the second antenna 432, the third antenna 433, or the fourth antenna 434 is disposed on different circuit boards, the electronic device 101 may further include a flexible printed circuit board (FPCB) or a coaxial cable for electrically connecting the different circuit boards.

According to an embodiment, the first antenna 431, the second antenna 432, the third antenna 433, or the fourth antenna 434 may include a patch-type antenna. According to an embodiment, the first antenna 431, the second antenna 432, the third antenna 433, or the fourth antenna 434 may include at least one of a monopole-type antenna, a dipole-type antenna, a biconical-type antenna, a mesh antenna, or a spiral-type antenna.

According to an embodiment, the plurality of antennas 431, 432, 433, and 434 may be formed as a conductor or a conductive pattern on the circuit board 420 and may function as antenna radiators. According to an embodiment, the circuit board 420 may be configured as a plurality of layers and may include a ground for grounding the plurality of antennas 431, 432, 433, and 434.

According to an embodiment, at least some of the plurality of antennas 431, 432, 433, and 434 may include a patch antenna element. The antenna 430, using the patch antenna element, may generate a beam of a radiation pattern from the inside to the outside of the electronic device 101, and may perform at least one of transmission and/or reception of an RF signal (e.g., a UWB signal) through an ultra-wideband (UWB) communication channel, based on the generation of the beam in the radiation pattern.

According to an embodiment, the plurality of antennas 431, 432, 433, and 434 may be disposed in a specified array on the circuit board 420. For example, the first antenna 431, the second antenna 432, or the third antenna 433 may be aligned based on a first direction (e.g., the X-axis direction in FIG. 6). For example, the first antenna 431 or the fourth antenna 434 may be aligned in a second direction (e.g., the Y-axis direction in FIG. 6) perpendicular to the first direction.

According to an embodiment, the processor 440 of the electronic device 101 may identify an angle-of-arrival on a first plane (e.g., a plane formed by the X-axis and the Z-axis in FIGS. 5 and 6 or a plane parallel thereto) of a signal transmitted by an external electronic device (e.g., the external electronic device 200 in FIGS. 2A to 2B) relative to the electronic device 101 through the communication module (e.g., the communication module 190 in FIG. 1), the first antenna 431, the second antenna 432, or the third antenna 433.

According to an embodiment, the processor 440 of the electronic device 101 may identify an angle-of-arrival on a second plane (e.g., a plane formed by the Y-axis and the Z-axis in FIGS. 5 and 6 or a plane parallel thereto) of a signal transmitted by an external electronic device (e.g., the external electronic device 200 in FIGS. 2A and 2B) relative to the electronic device 101 through the communication module (e.g., the communication module 190 in FIG. 1), the first antenna 431, or the fourth antenna 434.

According to an embodiment, the plurality of antennas 431, 432, 433, and 434 may be aligned at specified distances therebetween. According to an embodiment, the second antenna 432 may be disposed between the first antenna 431 and the third antenna 433.

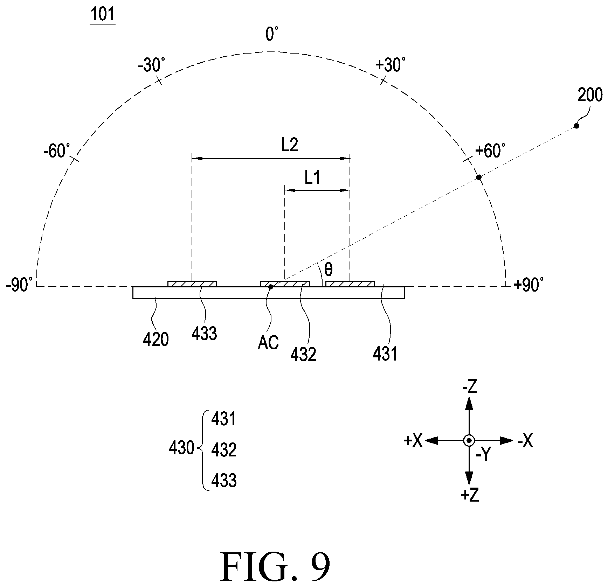

According to an embodiment, the first antenna 431 and the second antenna 432 may be disposed to be spaced apart by a first distance (e.g., the antenna distance L in FIG. 2C or the first distance L1 in FIG. 9) specified based on a first direction (e.g., the X-axis direction in FIG. 6). The first distance may be designed to be equal to or less than half ($\lambda/2$) the wavelength ($\lambda$) of a specified RF signal (e.g., a signal for UWB communication) capable of being transmitted and/or received by the communication module (e.g., the communication module 190 in FIG. 1) for ultra-wideband (UWB) communication through the antenna 430. The first distance may be defined as a distance between the center (e.g., the center in the X-axis direction in FIG. 6) of the first antenna 431 and the center (e.g., the center in the X-axis direction in FIG. 6) of the second antenna 432.

According to an embodiment, the first antenna 431 and the third antenna 433 may be disposed to be spaced apart by a second distance (e.g., the antenna distance L in FIG. 2C) specified based on the first direction (e.g., the X-axis direction in FIG. 6). The second distance may be designed to exceed half ($\lambda/2$) the wavelength ($\lambda$) of a specified RF signal (e.g., a signal for UWB communication) capable of being transmitted and/or received by the communication module (e.g., the communication module 190 in FIG. 1) for ultra-wideband (UWB) communication through the antenna 430. The second distance may be defined as a distance between the center (e.g., the center in the X-axis direction in FIG. 6) of the first antenna 431 and the center (e.g., the center in the X-axis direction in FIG. 6) of the third antenna 433.

According to an embodiment, the first antenna 431 and the fourth antenna 434 may be disposed to be spaced apart by a third distance specified based on a second direction (e.g., the Y-axis direction in FIG. 6). The third distance may be designed to be equal to or less than half ($\lambda/2$) the wavelength ($\lambda$) of a specified RF signal (e.g., a signal for UWB communication) capable of being transmitted and/or received by the communication module (e.g., the communication module 190 in FIG. 1) for ultra-wideband (UWB) communication through the antenna 430. The third distance may be defined as a distance between the center (e.g., the center in the Y-axis direction in FIG. 6) of the first antenna 431 and the center (e.g., the center in the X-axis direction in FIG. 6) of the fourth antenna 434.

According to an embodiment, the electronic device 101 may include a switching circuit 450 for selecting whether to operate the second antenna 432 and the third antenna 433. For example, the switching circuit 450 may include a switch for selectively connecting the second antenna 432 or the third antenna 433 to the processor 440 (or the communication module 190 in FIG. 1). According to an embodiment, the processor 440 and/or the communication module (e.g., the communication module 190 in FIG. 1) may transmit a switching signal to the switching circuit 450 for controlling the switching circuit 450, thereby switching the connection state of the processor 440 and/or the communication module and the antenna 430 (e.g., connection with the second antenna 432 or connection with the third antenna 433).

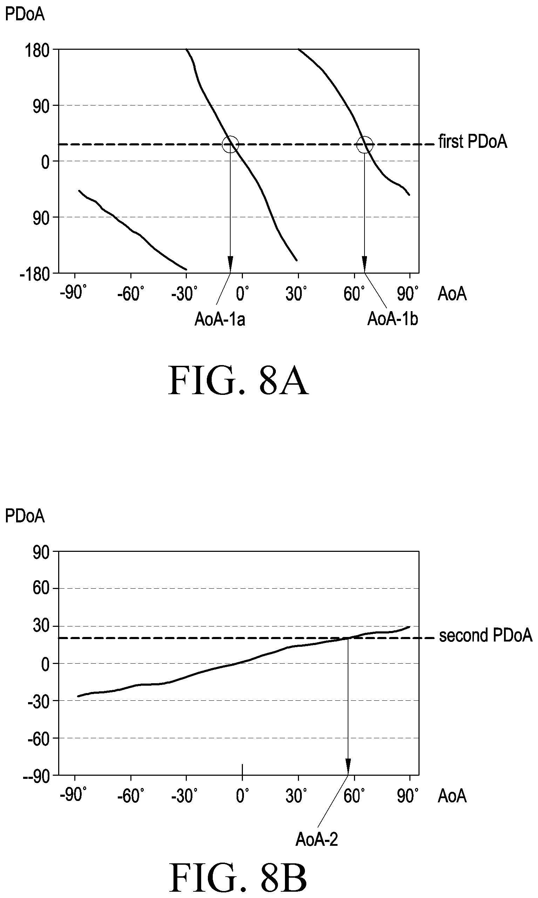

FIG. 7 is a flowchart illustrating a method for measuring an angle-of-arrival of an external electronic device relative to an electronic device according to an embodiment of the disclosure. FIG. 8A is a graph showing an angle-of-arrival of an external electronic device obtained based on a phase difference of arrival (PDoA) measured through a first antenna and a third antenna according to an embodiment of the disclosure. FIG. 8B is a graph showing an angle-of-arrival of an external electronic device obtained based on a phase difference of arrival (PDoA) measured through a first antenna and a second antenna according to an embodiment of the disclosure. FIG. 9 is a diagram illustrating an antenna module of an electronic device according to an embodiment of the disclosure.

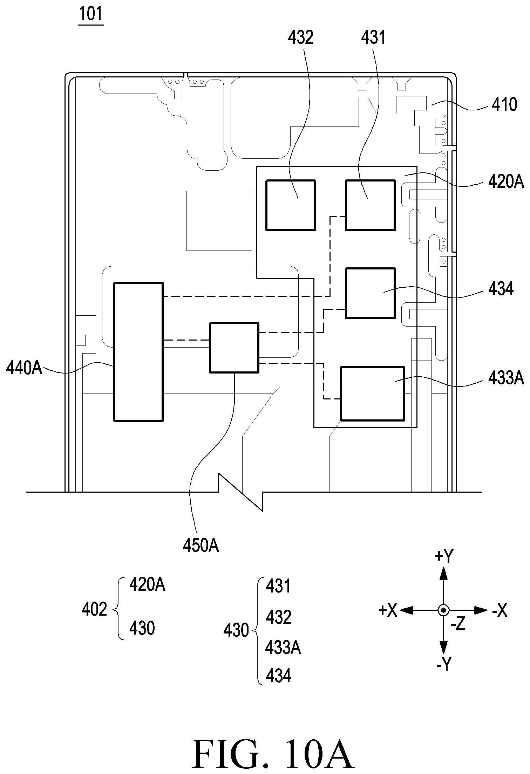

The embodiments in FIGS. 7 to 9 may be combined with the embodiments in FIGS. 1 to 6 or the embodiments in FIGS. 10A to 18B.

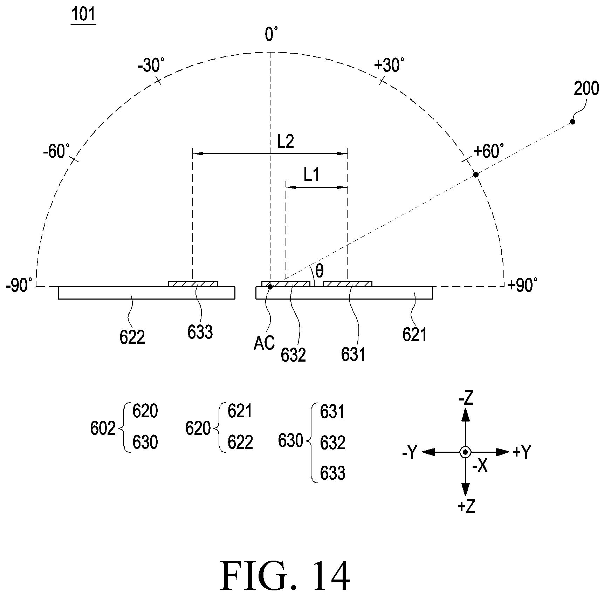

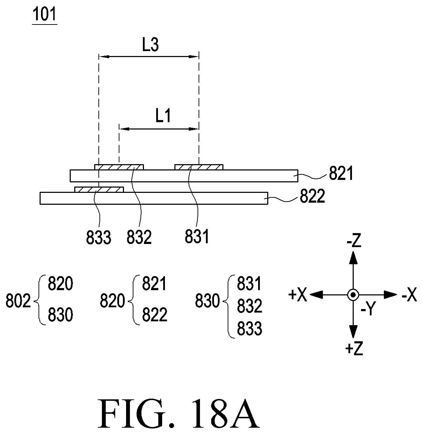

The angle-of-arrival θ of a transmission signal, which is direction information of an external electronic device (e.g., the external electronic device 200 in FIGS. 2A to 2B or the external electronic device 200 in FIG. 9) relative to the electronic device 101 and described with reference to FIGS. 7 to 8B as an example, will be described based on the electronic device 101 in FIG. 9 as an example for convenience of explanation, but a description thereof may be applied identically or similarly to the electronic device 101 in FIGS. 10A to 10C, the electronic device 101 in FIG. 14, or the electronic device 101 in FIGS. 18A to 18B.

Referring to FIG. 9, the electronic device 101 (e.g., the electronic device 101 in FIGS. 1 to 6) may include an antenna module 402 including a circuit board 420 or an antenna 430.

The configuration of the antenna module 402, circuit board 420, or antenna 430 in FIG. 9 may be partially or entirely identical to the configuration of the antenna module 402, circuit board 420, or antenna 430 in FIG. 6.

Referring to FIG. 9, the antenna 430 may include a first antenna 431 (e.g., the first antenna 431 in FIG. 6), a second antenna 432 (e.g., the second antenna 432 in FIG. 6), or a third antenna 433 (e.g., the third antenna 433 in FIG. 6).

According to an embodiment, the first antenna 431, the second antenna 432, or the third antenna 433 may be disposed on at least a portion of one side of the circuit board 420 (e.g., the side facing the rear plate 380 in FIG. 5 or the side facing in the -Z direction in FIG. 9).

According to an embodiment, the first antenna 431 and the second antenna 432 may be disposed to have a first distance L1 (e.g., the antenna distance L in FIG. 2C) that is a specified distance. According to an embodiment, the first distance L1 may be specified as a distance between the center (e.g., the center in the X-axis direction in FIG. 9) of the first antenna 431 and the center (e.g., the center in the X-axis direction in FIG. 9) of the second antenna 432.

According to an embodiment, the first distance L1, which is the distance between the first antenna 431 and the second antenna 432, may be designed to be equal to or less than half ($\lambda/2$) the wavelength ($\lambda$) of the RF signal (e.g., the signal for UWB communication) supported by the antenna 430.

According to an embodiment, the first antenna 431 and the third antenna 433 may be disposed to have a specified second distance L2 (e.g., the antenna distance L in FIG. 2C). According to an embodiment, the second distance L2 may be specified as a distance between the center (e.g., the center in the X-axis direction in FIG. 9) of the first antenna 431 and the center (e.g., the center in the X-axis direction in FIG. 9) of the third antenna 433.

According to an embodiment, the second distance L2, which is the distance between the first antenna 431 and the third antenna 433, may be designed to exceed half ($\lambda/2$) the wavelength ($\lambda$) of the RF signal (e.g., a signal for UWB communication) supported by the antenna 430.

According to an embodiment, the second antenna 432 may be disposed between the first antenna 431 and the third antenna 433.

According to an embodiment, the electronic device 101 may identify (or determine) an angle-of-arrival $\theta$ of a signal transmitted by the external electronic device 200 relative to the electronic device 101, based on at least one of a combination of the first antenna 431 and the third antenna 433 or a combination of the first antenna 431 and the second antenna 432.

According to an embodiment, the electronic device 101 may identify the direction (or position) of the external electronic device 200 relative to the electronic device 101, based on the AOA method described with reference to FIG. 2C as an example.

For example, the electronic device 101 may identify the angle-of-arrival $\theta$ of the signal transmitted by the external electronic device 200, based on the first antenna 431 (e.g., the first receiving antenna RX1 in FIG. 2C) and the third antenna 433 (e.g., the second receiving antenna RX2 in FIG. 2C). For example, the processor (e.g., the processor 120 in FIG. 1) of the electronic device 101 may identify the angle-of-arrival $\theta$ of the signal transmitted by the external electronic device 200, based on a phase difference of arrival (PDoA) of the signal of the external electronic device 200 reaching the first antenna 431 and the third antenna 433 and the second distance L2, using Equation 1 to Equation 3 described in FIG. 2C.

For example, the electronic device 101 may identify the angle-of-arrival $\theta$ of the signal transmitted by the external electronic device 200, based on the first antenna 431 (e.g., the first receiving antenna RX1 in FIG. 2C) and the second antenna 432 (e.g., the second receiving antenna RX2 in FIG. 2C). For example, the processor (e.g., the processor 120 in FIG. 1) of the electronic device 101 may identify the angle-of-arrival $\theta$ of the signal transmitted by the external electronic device 200, based on the phase difference of arrival (PDoA) of the signal of the external electronic device 200 reaching the first antenna 431 and the second antenna 432 and the first distance L1, using Equation 1 to Equation 3 described in FIG. 2C.

According to an embodiment, the processor of the electronic device 101 may detect the direction of the external electronic device 200 in real time, based on phase differences of arrival (PDoA) and antenna distances L1 and L2 of the antennas 431, 432, and 433 of the antenna 430 with respect to the signal of the external electronic device 200.

According to an embodiment, the memory (e.g., the memory 130 in FIG. 1) of the electronic device 101 may store a first angle-of-arrival table including information about the angle-of-arrivals $\theta$ for the phase differences of arrival (PDoA) detected from a combination of the first antenna 431 and the third antenna 433. According to an embodiment, the first angle-of-arrival table may include information about angle-of-arrivals $\theta$ obtained through Equation 1 to Equation 3 above, based on the phase differences of arrival (PDoA) detected from the first antenna 431 and third antenna 433 and the second distance L2. For example, the memory of the electronic device 101 may store angle-of-arrivals $\theta$ matching the phase differences of arrival (PDoA). The information about angle-of-arrivals $\theta$ included in the first angle-of-arrival table may be values obtained through Equation 1 to Equation 3 above, or values obtained by correcting the obtained values according to the structure or RF signal of the electronic device 100.

According to an embodiment, the memory (e.g., the memory 130 in FIG. 1) of the electronic device 101 may store a second angle-of-arrival table including information about angle-of-arrivals $\theta$ for phase differences of arrival (PDoA) detected from a combination of the first antenna 431 and the second antenna 433. According to an embodiment, the second angle-of-arrival table may include information about angle-of-arrivals $\theta$ obtained through Equation 1 to Equation 3 above, based on the phase differences of arrival (PDoA) detected from the first antenna 431 and second antenna 432 and the first distance L1. For example, the memory of the electronic device 101 may store angle-of-arrivals $\theta$ matching the phase differences of arrival (PDoA). The information about angle-of-arrivals $\theta$ included in the above second angle-of-arrival table may be values obtained through Equation 1 to Equation 3 above, or may be values obtained by correcting the obtained values according to the structure or the RF signal of the electronic device 100.

Referring to FIGS. 7 to 9, a process in which the electronic device 101 identifies the angle-of-arrival θ of a signal transmitted by the external electronic device 200 will be described. FIG. 8A is a graph illustrating a first angle-of-arrival table including information about angle-of-arrivals matching phase differences of arrival (PDoA), and FIG. 8B is a graph illustrating a second angle-of-arrival table including information about angle-of-arrivals matching phase differences of arrival (PDoA).

The graph in FIG. 8A shows a first angle-of-arrival table for phase differences of arrival (PDoA) and angle-of-arrivals when the second distance L2, which is the distance between the first antenna 431 and the third antenna 433, is equal to the wavelength (λ) of an RF signal supported by the antenna 430. The graph in FIG. 8B shows a second angle-of-arrival table for phase differences of arrival (PDoA) and angle-of-arrivals when the first distance L1, which is the distance between the first antenna 431 and the third antenna 433, is half (λ/2) the wavelength (λ) of an RF signal supported by the antenna 430.

For example, as the distance between the antennas is reduced, the measurement accuracy of the angle-of-arrival of the external electronic device may decrease, and as the distance between the antennas is increased, the measurement accuracy of the angle-of-arrival of the external electronic device may improve. For example, referring to the first angle-of-arrival table in FIG. 8A including information about angle-of-arrivals matching phase differences of arrival (PDoA) when the distance between the antennas is the second distance L2, which is relatively large, it may be seen that the slope of phase differences of arrival (PDoA) for the angle-of-arrivals in the first angle-of-arrival table is greater than the slope of phase differences of arrival (PDoA) for the angle-of-arrivals in the second angle-of-arrival table in FIG. 8B. Accordingly, the angle-of-arrival measured when the distance between the antennas is relatively large may be more accurate than the angle-of-arrival measured when the distance between the antennas is relatively small. In addition, when the distance between the antennas is relatively large, there may be multiple angle-of-arrivals matching the phase differences of arrival (PDoA). Accordingly, when the distance between antennas is relatively large, it may be necessary to identify which of the multiple measured angle-of-arrivals is the correct value. When the distance between antennas is relatively small, there may be one angle-of-arrival matching the phase difference of arrival (PDoA). According to an embodiment, the electronic device 101 may measure a plurality of first angle-of-arrival values with higher accuracy through the antennas whose distance is relatively large, and may measure a single second angle-of-arrival value with lower accuracy through the antennas whose distance is relatively small. The electronic device 101 may identify an angle-of-arrival value close to one second angle-of-arrival value, from among the plurality of measured first angle-of-arrival values, as the angle-of-arrival of a signal transmitted by the external electronic device 200 relative to the electronic device 101.

According to an embodiment, as the distance between the antennas increases, the points where the phase difference of arrival (PDoA) based on an angle-of-arrival of a signal transmitted by an external electronic device and another angle-of-arrival thereof overlap may increase, and as the distance between the antennas decreases, the point where the phase difference of arrival (PDoA) based on an angle-of-arrival of an external electronic device overlaps and another angle-of-arrival thereof overlap may decrease.

The processor (e.g., the processor 120 in FIG. 1) of the electronic device 101 may identify a first phase difference of arrival (PDoA) of a signal (e.g., a UWB signal) received from the external electronic device 200 through the first antenna 431 and the third antenna 433 (P10).

The processor of the electronic device 101 may identify a plurality of first angle-of-arrivals AOA-1a and AOA-1b matching the first phase difference of arrival (PDoA) from the first angle-of-arrival table stored in the memory (e.g., the memory 130 in FIG. 1) (P30).

For example, if the first antenna 431 and the third antenna 433 of the electronic device 101 are disposed at a distance (e.g., the second distance L2) exceeding a half-wavelength of the RF signal supported by the antenna 430, any angle-of-arrival θ of the signal transmitted by the external electronic device 200 relative to the electronic device 101 may have the same phase difference of arrival (PDoA) as another angle-of-arrival. For example, if the angle-of-arrival of the signal transmitted by an external electronic device 200 relative to the electronic device 101 is +65 degrees, the phase difference of arrival (PDoA) of the first antenna 431 and the third antenna 433 received from the external electronic device 200 having an angle-of-arrival of +65 degrees may be substantially the same as the phase difference of arrival (PDoA) of the first antenna 9431 and the third antenna 433 received from the external electronic device having an angle-of-arrival of -5 degrees.

Accordingly, two angle-of-arrivals θ for a first phase difference of arrival (PDoA) may be stored in the memory of the electronic device 101 (P30).

Referring to FIG. 8A, a plurality of first angle-of-arrival values AoA-1a and AoA-1b may be matched to a specific first phase difference of arrival (PDoA). For example, one AoA-1a of the plurality of first angle-of-arrival values may be -5 degrees, and the other one AoA-1b may be +65 degrees.

The processor of the electronic device 101 may identify a second phase difference of arrival (PDoA) of a signal (e.g., a UWB signal) received from the external electronic device 200 through the first antenna 431 and the second antenna 432 (P50).

The processor of the electronic device 101 may identify one first angle-of-arrival AOA-2 matching the second phase difference of arrival (PDoA) (first phase difference of arrival (PDoA)) from a second angle-of-arrival table stored in the memory (e.g., the memory 130 in FIG. 1) (P70).

For example, if the first antenna 431 and the second antenna 432 of the electronic device 101 are disposed at a distance (e.g., the first distance L1) equal to or less than a half-wavelength of the RF signal supported by the antenna 430, no angle-of-arrival θ of the signal transmitted by the external electronic device 200 relative to the electronic device 101 may have the same phase difference of arrival (PDoA) as another angle-of-arrival.

Accordingly, one angle-of-arrival θ for a second phase difference of arrival (PDoA) may be stored in the memory of the electronic device 101.

Referring to FIG. 8B, one second angle-of-arrival value AoA-2 may be matched to a specific second phase difference of arrival (PDoA). For example, the second angle-of-arrival value AoA-1a may be +58 degrees.

The processor of the electronic device 101 may identify, as the angle-of-arrival θ of the signal transmitted by the external electronic device 200, the first angle-of-arrival AoA-1b that is closest to the second angle-of-arrival AoA-2 from among the plurality of first angle-of-arrivals AoA-1a and AoA-1b (P90). For example, if the second angle-of-arrival value AoA-2 is +58 degrees, the first angle-of-arrival value AoA-1b of +65 degrees among the plurality of first angle-of-arrival values AoA-1a and AoA-1b is the closest value to the second angle-of-arrival value AoA-2, so the processor of the electronic device 101 may identify the first angle-of-arrival value of +65 degrees as the angle-of-arrival of the signal transmitted by the external electronic device 200.

According to an embodiment, since the second distance L2 between the first antenna 431 and the third antenna 433 is configured to be greater than the first distance L1 between the first antenna 431 and the second antenna 432, the angle-of-arrival θ of the signal transmitted by the external electronic device 200 measured based on the first antenna 431 and the third antenna 433 may be more accurate than the angle-of-arrival value of the signal transmitted by the external electronic device 200 measured based on the first antenna 431 and the second antenna 432. Since the angle-of-arrival θ of the signal transmitted by the external electronic device 200 measured through the first antenna 431 and the third antenna 433 is the same as the phase difference of arrival (PDoA) based on any other angle-of-arrival, the processor of the electronic device 101 may select a first angle-of-arrival value that is close to the angle-of-arrival measured based on the first antenna 431 and the second antenna 432 from among the plurality of first angle-of-arrival values stored in the first angle-of-arrival table, thereby determining the angle-of-arrival θ of the signal transmitted by the external electronic device 200 more accurately.

According to an embodiment, the angle-of-arrival θ may be defined as the direction of the external electronic device 200 measured based on a reference point AC between the center of the first antenna 431 and the center of the third antenna 433, but is not limited thereto, and the reference point defining the direction of the external electronic device 200 may vary depending on a design change.

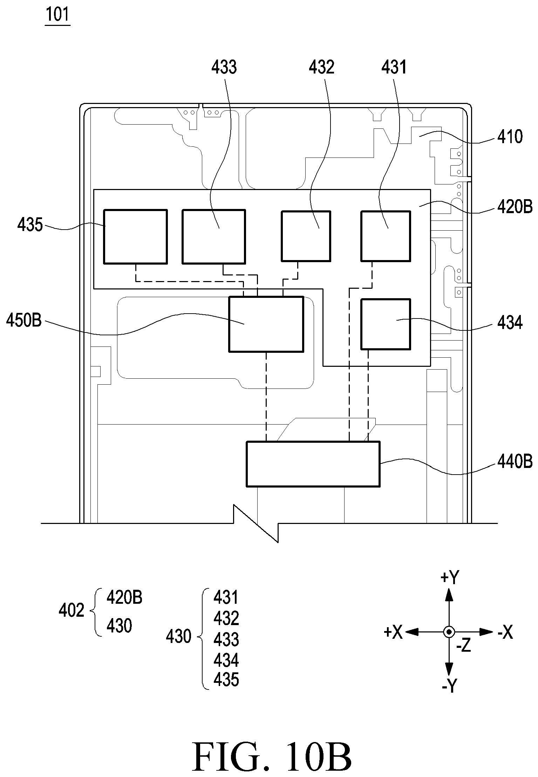

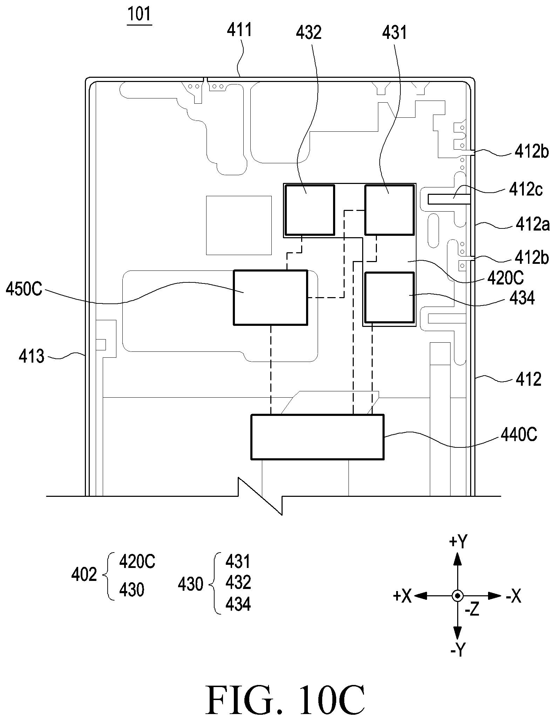

FIG. 10A is a diagram illustrating an antenna module of an electronic device according to an embodiment of the disclosure. FIG. 10B is a diagram illustrating an antenna module of an electronic device according to an embodiment of the disclosure. FIG. 10C is a diagram illustrating an antenna module of an electronic device according to an embodiment of the disclosure.

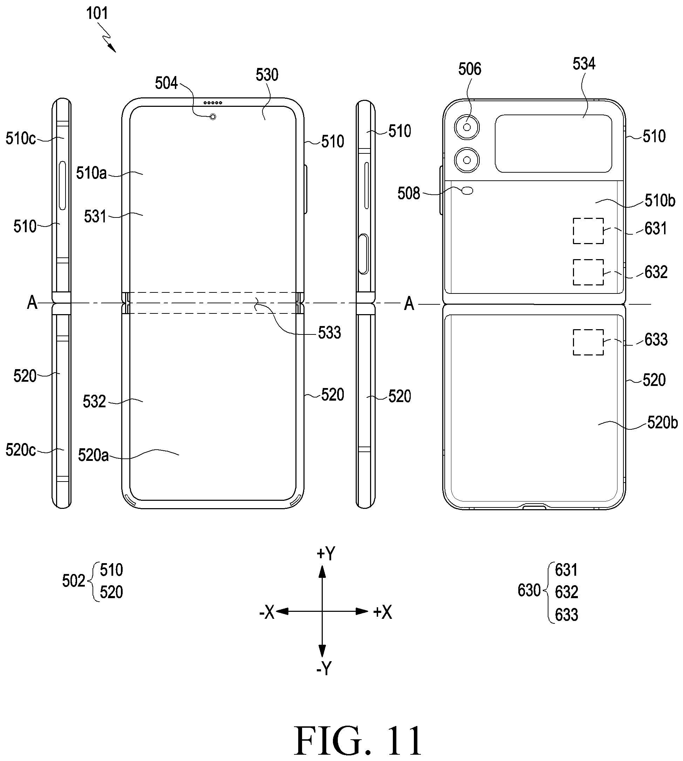

The embodiments in FIGS. 10A to 10C may be combined with the embodiments in FIGS. 1 to 9 or the embodiments in FIGS. 11 to 18B.

Referring to FIGS. 10A to 10C, an electronic device 101 (e.g., the electronic device 101 in FIGS. 1 to 5) may include a housing 410, an antenna module 402 including circuit boards 420A, 420B, and 420C or an antenna 430, processors 440A, 440B, and 440C, or switching circuits 450A, 450B, and 450C.

The configuration of the housing 410 in FIGS. 10A to 10C may be partially or entirely identical to the configuration of the housing 310 in FIGS. 3 to 4 or the configuration of the bracket 322 in FIG. 5. The configuration of the antenna module 402 in FIGS. 10A to 10C may be partly or entirely identical to the configuration of the antenna 197 in FIG. 1, the configuration of the antenna module 390 in FIG. 5, the configuration of the antenna module 402 in FIG. 6, or the configuration of the antenna module 402 in FIG. 9. The configuration of the circuit boards 420A, 420B, and 420C in FIGS. 10A to 10C may be partly or entirely identical to the configuration of the circuit board 420 in FIG. 9. The configuration of the antenna 430 in FIGS. 10A to 10C may be partly or entirely identical to the configuration of the antenna 197 in FIG. 1, the configuration of two receiving antennas RX1 and RX2 in FIG. 2C, the configuration of the antenna 430 in FIG. 6, or the configuration of the antenna 430 in FIG. 9. The configuration of the processors 440A, 440B, and 440C in FIGS. 10A to 10C may be partly or entirely identical to the configuration of the processor 120 in FIG. 1 or the configuration of the processor 120 in FIG. 6. The configuration of the switching circuits 450A, 450B, and 450C in FIGS. 10A to 10C may be partly or entirely identical to the configuration of the switching circuit 450 in FIG. 6.

Referring to FIG. 10A, a circuit board 420A, an antenna 430, a processor 440A, or a switching circuit 450A may be disposed inside the housing 410.

According to an embodiment, the antenna module 402 may include a circuit board 420A or an antenna 430.

According to an embodiment, the circuit board 420A may be disposed inside the housing 410. For example, the circuit board 420A may be disposed between a support member (e.g., the support member 332 in FIG. 5) and a rear plate (e.g., the rear plate 380 in FIG. 5).

According to an embodiment, the antenna 430 may be disposed or mounted on one side (e.g., the side facing in the -Z direction in FIG. 5 or FIG. 10A) of the circuit board 420A. For example, the antenna 430 may be disposed to face the rear plate (e.g., the rear plate 380 in FIG. 5).

According to an embodiment, a communication module (e.g., the communication module 190 in FIG. 1) and the antenna 430 may be connected so that the electronic device 101 may communicate with an external electronic device (e.g., the external electronic device 200 in FIGS. 2A to 2B). According to an embodiment, the processor 440A (e.g., the processor 120 in FIG. 1) of the electronic device 101, based on the AOA method described in FIG. 2C, may identify an angle-of-arrival (e.g., the angle-of-arrival θ in FIG. 2C) that is direction information of the external electronic device, through a signal of the external electronic device (e.g., a signal for UWB ultra-wideband communication) received through the antenna 430.

According to an embodiment, the antenna 430 may include a plurality of antennas 431, 432, 433A, and 434. For example, the antenna 430 may include a first antenna 431, a second antenna 432, a third antenna 433A, or a fourth antenna 434 configured to transmit and/or receive an RF signal (e.g., a UWB signal) in a frequency band of about 3 GHz to about 10 GHz. According to an embodiment, the first antenna 431, the second antenna 432, the third antenna 433A, or the fourth antenna 434 may be disposed on substantially the same plane (e.g., a plane formed by the X-axis and the Y-axis in FIG. 10A or a plane parallel thereto), but is not limited thereto. In addition, the first antenna 431, the second antenna 432, the third antenna 433A, or the fourth antenna 434 may be disposed on different circuit boards, as well as on the same circuit board 420A. If the first antenna 431, the second antenna 432, the third antenna 433A, or the fourth antenna 434 is disposed on different circuit boards, the electronic device 101 may further include a flexible printed circuit board (FPCB) or a coaxial cable for electrically connecting the different circuit boards.

According to an embodiment, the first antenna 431, the second antenna 432, the third antenna 433A, or the fourth antenna 434 may include a patch-type antenna. According to an embodiment, the first antenna 431, the second antenna 432, the third antenna 433A, or the fourth antenna 434 may include at least one of a monopole-type antenna, a dipole-type antenna, a biconical-type antenna, a mesh antenna, or a spiral-type antenna.

According to an embodiment, the plurality of antennas 431, 432, 433A, and 434 may be formed as a conductor or a conductive pattern on the circuit board 420A and may function as antenna radiators. According to an embodiment, the circuit board 420 may be configured as a plurality of layers and may include a ground for grounding the plurality of antennas 431, 432, 433A, and 434.

According to an embodiment, at least some of the plurality of antennas 431, 432, 433A, and 434 may include a patch antenna element. The antenna 430, using the patch antenna element, may generate a beam of a radiation pattern from the inside to the outside of the electronic device 101, and may perform at least one of transmission and/or reception of an RF signal (e.g., a UWB signal) through an ultra-wideband (UWB) communication channel, based on the generation of the beam in the radiation pattern.

According to an embodiment, the plurality of antennas 431, 432, 433A, and 434 may be disposed in a specified array on the circuit board 420A. For example, the first antenna 431, the fourth antenna 434, or the third antenna 433A may be aligned based on a second direction (e.g., the Y-axis direction in FIG. 10A). For example, the first antenna 431 or the second antenna 432 may be aligned in a first direction (e.g., the X-axis direction in FIG. 10A) perpendicular to the second direction.

According to an embodiment, the processor 440A of the electronic device 101 may identify an angle-of-arrival on a second plane (e.g., a plane formed by the Y-axis and the Z-axis in FIG. 5 or 10A or a plane parallel thereto) of a signal transmitted by an external electronic device (e.g., the external electronic device 200 in FIGS. 2A to 2B) relative to the electronic device 101 through the communication module (e.g., the communication module 190 in FIG. 1), the first antenna 431, the fourth antenna 434, or the third antenna 433A.

According to an embodiment, the processor 440A of the electronic device 101 may identify an angle-of-arrival on a first plane (e.g., a plane formed by the X-axis and the Z-axis in FIG. 5 or 10A or a plane parallel thereto) of a signal transmitted by an external electronic device (e.g., the external electronic device 200 in FIGS. 2A and 2B) relative to the electronic device 101 through the communication module (e.g., the communication module 190 in FIG. 1), the first antenna 431, or the second antenna 432.

According to an embodiment, the plurality of antennas 431, 432, 433A, and 434 may be aligned at specified distances therebetween. According to an embodiment, the fourth antenna 434 may be disposed between the first antenna 431 and the third antenna 433A.

According to an embodiment, the first antenna 431 and the fourth antenna 434 may be disposed to be spaced apart by a first distance (e.g., the antenna distance L in FIG. 2C) specified based on the second direction (e.g., the Y-axis direction in FIG. 10A). The first distance may be designed to be equal to or less than half ($\lambda/2$) the wavelength ($\lambda$) of a specified RF signal (e.g., a signal for UWB communication) capable of being transmitted and/or received by the communication module (e.g., the communication module 190 in FIG. 1) for ultra-wideband (UWB) communication through the antenna 430. The first distance may be defined as a distance between the center (e.g., the center in the Y-axis direction in FIG. 10) of the first antenna 431 and the center (e.g., the center in the Y-axis direction in FIG. 6) of the fourth antenna 434.

According to an embodiment, the first antenna 431 and the third antenna 433A may be disposed to be spaced apart by a second distance (e.g., the antenna distance L in FIG. 2C) specified based on the second direction (e.g., the Y-axis direction in FIG. 10A). The second distance may be designed to exceed half ($\lambda/2$) the wavelength ($\lambda$) of a specified RF signal (e.g., a signal for UWB communication) capable of being transmitted and/or received by the communication module (e.g., the communication module 190 in FIG. 1) for ultra-wideband (UWB) communication through the antenna 430. The second distance may be defined as a distance between the center (e.g., the center in the Y-axis direction in FIG. 10A) of the first antenna 431 and the center (e.g., the center in the Y-axis direction in FIG. 10A) of the third antenna 433A.

According to an embodiment, the first antenna 431 and the second antenna 432 may be disposed to be spaced apart by a third distance specified based on the first direction (e.g., the X-axis direction in FIG. 10A). The third distance may be designed to be equal to or less than half ($\lambda/2$) the wavelength ($\lambda$) of a specified RF signal (e.g., a signal for UWB communication) capable of being transmitted and/or received by the communication module (e.g., the communication module 190 in FIG. 1) for ultra-wideband (UWB) communication through the antenna 430. The third distance may be defined as a distance between the center (e.g., the center in the X-axis direction in FIG. 10A) of the first antenna 431 and the center (e.g., the center in the X-axis direction in FIG. 10A) of the second antenna 432.

According to an embodiment, the electronic device 101 may include a switching circuit 450A for selecting whether to operate the second antenna 432 and the third antenna 433. For example, the switching circuit 450A may include a switch for selectively connecting the third antenna 433A or the fourth antenna 434 to the processor 440A (or the communication module 190 in FIG. 1). According to an embodiment, the processor 440A and/or the communication module (e.g., the communication module 190 in FIG. 1) may transmit a switching signal to the switching circuit 450A for controlling the switching circuit 450A, thereby switching the connection state of the processor 440A and/or the communication module and the antenna 430 (e.g., connection with the third antenna 433A or connection with the fourth antenna 434).

Referring to FIG. 10B, the electronic device 101 may include an antenna module 402 including a circuit board 420B or an antenna 430, a housing 410, a processor 440B, or a switching circuit 450B.

According to an embodiment, the antenna 430 may include a first antenna 431, a second antenna 432, a third antenna 433, a fourth antenna 434, or a fifth antenna 435.

According to an embodiment, the plurality of antennas 431, 432, 433, 434, and 435 may be disposed in a specified array on the circuit board 420B. For example, the first antenna 431, the second antenna 432, the third antenna 433, or the fifth antenna 435 may be aligned based on a first direction (e.g., the X-axis direction in FIG. 10B). For example, the first antenna 431 or the fourth antenna 434 may be aligned in a second direction (e.g., the Y-axis direction in FIG. 10B) perpendicular to the first direction.

According to an embodiment, the processor 440B of the electronic device 101 may identify an angle-of-arrival on a first plane (e.g., a plane formed by the X-axis and the Z-axis in FIG. 5 or 10B or a plane parallel thereto) of a signal transmitted by an external electronic device (e.g., the external electronic device 200 in FIGS. 2A to 2B) relative to the electronic device 101 through the communication module (e.g., the communication module 190 in FIG. 1), the first antenna 431, the second antenna 432, the third antenna 433, or the fifth antenna 435.

According to an embodiment, the processor 440B of the electronic device 101 may identify an angle-of-arrival on a second plane (e.g., a plane formed by the Y-axis and the Z-axis in FIG. 5 or 10B or a plane parallel thereto) of a signal transmitted by an external electronic device (e.g., the external electronic device 200 in FIGS. 2A to 2B) relative to the electronic device 101 through the communication module (e.g., the communication module 190 in FIG. 1), the first antenna 431, or the fourth antenna 434.

According to an embodiment, the plurality of antennas 431, 432, 433, 434, and 435 may be aligned at specified distances therebetween. According to an embodiment, the third antenna 433 may be disposed between the second antenna 432 and the fifth antenna 435.

According to an embodiment, the first antenna 431 and the second antenna 432 may be disposed to be spaced apart by a first distance (e.g., the antenna distance L in FIG. 2C) specified based on the first direction (e.g., the X-axis direction in FIG. 10B). The first distance may be designed to be equal to or less than half ($\lambda/2$) the wavelength ($\lambda$) of a specified RF signal (e.g., a signal for UWB communication) capable of being transmitted and/or received by the communication module (e.g., the communication module 190 in FIG. 1) for ultra-wideband (UWB) communication through the antenna 430. According to an embodiment, the first distance may be defined as a distance between the center (e.g., the center in the X-axis direction in FIG. 10B) of the first antenna 431 and the center (e.g., the center in the X-axis direction in FIG. 10B) of the second antenna 432.

According to an embodiment, the first antenna 431 and the third antenna 433 may be disposed to be spaced apart by a second distance (e.g., the antenna distance L in FIG. 2C) specified based on the first direction (e.g., the Y-axis direction in FIG. 10B). The second distance may be designed to exceed half ($\lambda/2$) the wa-

velength (λ) of a specified RF signal (e.g., a signal for UWB communication) capable of being transmitted and/or received by the communication module (e.g., the communication module 190 in FIG. 1) for ultra-wideband (UWB) communication through the antenna 430. The second distance may be defined as a distance between the center (e.g., the center in the X-axis direction in FIG. 10B) of the first antenna 431 and the center (e.g., the center in the X-axis direction in FIG. 10B) of the third antenna 433.

According to an embodiment, the first antenna 431 and the fourth antenna 434 may be disposed to be spaced apart by a third distance specified based on the second direction (e.g., the Y-axis direction in FIG. 10B). The third distance may be designed to be equal to or less than half (λ/2) the wavelength (λ) of a specified RF signal (e.g., a signal for UWB communication) capable of being transmitted and/or received by the communication module (e.g., the communication module 190 in FIG. 1) for ultra-wideband (UWB) communication through the antenna 430. The third distance may be defined as a distance between the center (e.g., the center in the Y-axis direction in FIG. 10B) of the first antenna 431 and the center (e.g., the center in the Y-axis direction in FIG. 10B) of the fourth antenna 434.

According to an embodiment, the first antenna 431 and the fifth antenna 435 may be disposed to be spaced apart by a fourth distance specified based on the first direction (e.g., the X-axis direction in FIG. 10B). The fourth distance may be greater than the third distance. The fourth distance may be designed to exceed the wavelength (λ) of a specified RF signal (e.g., a signal for UWB communication) capable of being transmitted and/or received by the communication module (e.g., the communication module 190 in FIG. 1) for ultra-wideband (UWB) communication through the antenna 430, but is not limited thereto. For example, the fourth distance may be defined as a distance between the center (e.g., the center in the X-axis direction in FIG. 10B) of the first antenna 431 and the center (e.g., the center in the X-axis direction in FIG. 10B) of the fifth antenna 435.

According to an embodiment, the electronic device 101 may include a switching circuit 450B for selecting whether to operate the second antenna 432, the third antenna 433, or the fifth antenna 435. For example, the switching circuit 450B may include a switch for selectively connecting the second antenna 432, the third antenna 433, or the fifth antenna 435 to the processor 440B (or the communication module 190 in FIG. 1). According to an embodiment, the processor 440B and/or the communication module (e.g., the communication module 190 in FIG. 1) may transmit a switching signal to the switching circuit 450B for controlling the switching circuit 450B, thereby switching the connection state of the processor 440B and/or the communication module and the antenna 430 (e.g., connection with the second antenna 432, connection with the third antenna 433, or connection with the fifth antenna 435).

According to an embodiment, the electronic device 101 (or the processor 440B) may use a combination of the first antenna 431 and the third antenna 433 or a combination of the first antenna 431 and the fifth antenna 435 in order to obtain a plurality of first angle-of-arrival values.

Referring to FIG. 10C, the electronic device 101 may include an antenna module 402 including a circuit board 420C or an antenna 430, a housing 410, a processor 440C, or a switching circuit 450C.

According to an embodiment, the antenna 430 may include a first antenna 431, a second antenna 432, or a fourth antenna 434.

According to an embodiment, the housing 410 may include a first side wall 411, a second side wall 412, or a third side wall 413 constituting a side surface of the housing 410.

According to an embodiment, the second side wall 412 may be disposed perpendicularly to the first side wall 411 and parallel to the third side wall 413.

According to an embodiment, the second side wall 412 may include a metal area 412a having at least a portion made of a metal material. According to an embodiment, the metal area 412a may form a metal antenna of the electronic device 101.

According to an embodiment, the length of the metal area 412a (e.g., the length in the Y-axis direction in FIG. 10C) may be adjusted by a pair of non-metal areas 412c formed at both ends of the metal area 412a. The pair of non-metal areas 412c may also be defined as injection molding areas. The pair of non-metal areas 412a may be formed of a non-metal material (e.g., polymer).

According to an embodiment, by adjusting the length of the metal area 412a positioned between the pair of non-metal areas 412a, the frequency band of the metal antenna formed by the metal area 412a may be tuned.

According to an embodiment, the metal area 412a may be connected to a feeding portion 412c at least in a portion. The feeding portion 412c may be configured to apply an antenna signal to the metal area 412a so that the antenna signal is radiated through the metal area 412a. According to an embodiment, the metal antenna formed by the metal area 412a may be configured to transmit and/or receive an antenna signal (or RF signal).

According to an embodiment, the metal area 412a may be electrically connected to a communication module (e.g., communication module 190 in FIG. 1).

According to an embodiment, the plurality of antennas 431, 432, and 434 and the metal area 412a may be disposed in a specified array. For example, the first antenna 431, the second antenna 432, or the metal area 412a may be aligned based on a first direction (e.g., the X-axis direction in FIG. 10C). For example, the first antenna 431 or the fourth antenna 434 may be aligned based on a second direction (e.g., the Y-axis direction in FIG. 10C) perpendicular to the first direction.

According to an embodiment, the processor 440C of the electronic device 101 may identify an angle-of-arrival on a first plane (e.g., a plane formed by the X-axis and the Z-axis in FIG. 5 or 10B or a plane parallel thereto) of a signal transmitted by the external electronic device (e.g., the external electronic device 200 in FIGS. 2A to 2B) relative to the electronic device 101 through the communication module (e.g., the communication module 190 in FIG. 1), the first antenna 431, the second antenna 432, or the metal area 412a.

According to an embodiment, the processor 440C of the electronic device 101 may identify an angle-of-arrival on a second plane (e.g., a plane formed by the Y-axis and the Z-axis in FIG. 5 or 10B or a plane parallel thereto) of a signal transmitted by the external electronic device (e.g., the external electronic device 200 in FIGS. 2A to 2B) relative to the electronic device 101 through the communication module (e.g., the communication module 190 in FIG. 1), the first antenna 431, or the fourth antenna 434.

According to an embodiment, the plurality of antennas 431, 432, and 434 and the metal area 412a may be aligned at a specified distance therebetween. According to an embodiment, the first antenna 431 may be disposed between the second antenna 432 and the metal area 412a.

According to an embodiment, the metal area 412a and the first antenna 431 may be disposed to be spaced apart by a first distance (e.g., the antenna distance L in FIG. 2C) specified based on the first direction (e.g., the X-axis direction in FIG. 10C). The first distance may be designed to be equal to or less than half ($\lambda/2$) the wavelength ($\lambda$) of a specified RF signal (e.g., a signal for UWB communication) capable of being transmitted and/or received by the communication module (e.g., the communication module 190 in FIG. 1) for ultra-wideband (UWB) communication through the antenna 430. According to an embodiment, the first distance may be defined as a distance between the center (e.g., the center in the X-axis direction in FIG. 10C) of the first antenna 431 and a feeding point (e.g., a point where the feeding portion 412c is connected) of the metal area 412a.

According to an embodiment, the second antenna 432 and the metal area 412a may be disposed to be spaced apart by a second distance (e.g., the antenna distance L in FIG. 2C) specified based on the first direction (e.g., the Y-axis direction in FIG. 10C). The second distance may be designed to exceed half ($\lambda/2$) the wavelength ($\lambda$) of a specified RF signal (e.g., a signal for UWB communication) capable of being transmitted and/or received by the communication module (e.g., the communication module 190 in FIG. 1) for ultra-wideband (UWB) communication through the antenna 430. The second distance may be defined as a distance between the center (e.g., the center in the X-axis direction in FIG. 10C) of the second antenna 432 and a feeding point (e.g., a point where the feeding portion 412c is connected) of the metal area 412a.

According to an embodiment, the first antenna 431 and the fourth antenna 434 may be disposed to be spaced apart by a third distance specified based on the second direction (e.g., the Y-axis direction in FIG. 10C). The third distance may be designed to be equal to or less than half ($\lambda/2$) the wavelength ($\lambda$) of a specified RF signal (e.g., a signal for UWB communication) capable of being transmitted and/or received by the communication module (e.g., the communication module 190 in FIG. 1) for ultra-wideband (UWB) communication through the antenna 430. The third distance may be defined as a distance between the center (e.g., the center in the Y-axis direction in FIG. 10C) of the first antenna 431 and the center (e.g., the center in the Y-axis direction in FIG. 10C) of the fourth antenna 434

According to an embodiment, the electronic device 101 may include a switching circuit 450C for selecting whether to operate the first antenna 431 or the second antenna 432. For example, the switching circuit 450C may include a switch for selectively connecting the first antenna 431 or the second antenna 432 to the processor 440C (or the communication module 190 in FIG. 1). According to an embodiment, the processor 440C and/or the communication module (e.g., the communication module 190 in FIG. 1) may transmit a switching signal to the switching circuit 450C for controlling the switching circuit 450C, thereby switching the connection state of the processor 440C and/or the communication module and the antenna 430 (e.g., connection with the first antenna 431 or connection with the second antenna 432).

According to an embodiment, the electronic device 101 (or the processor 440C) may use a combination of a metal antenna formed by the metal area 412a and the second antenna 432 in order to obtain a plurality of first angle-of-arrival values. According to an embodiment, the electronic device 101 (or the processor 440C) may use a combination of a metal antenna formed by the metal area 412a and the first antenna 431 in order to obtain one second angle-of-arrival value.

FIG. 11 is a diagram illustrating an unfolded state of an electronic device according to an embodiment of the disclosure.

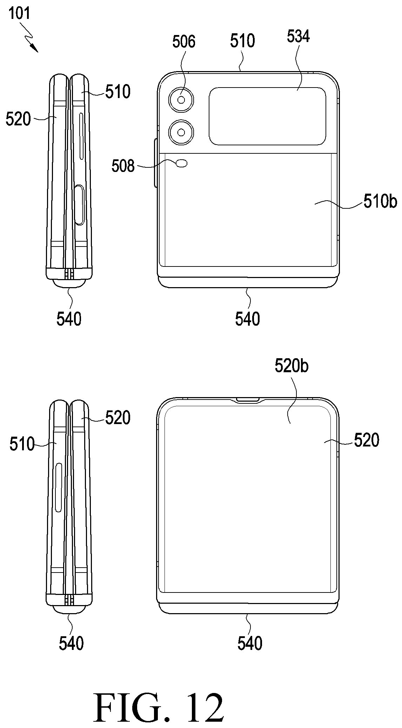

FIG. 12 is a diagram illustrating a folded state of an electronic device according to an embodiment of the disclosure.

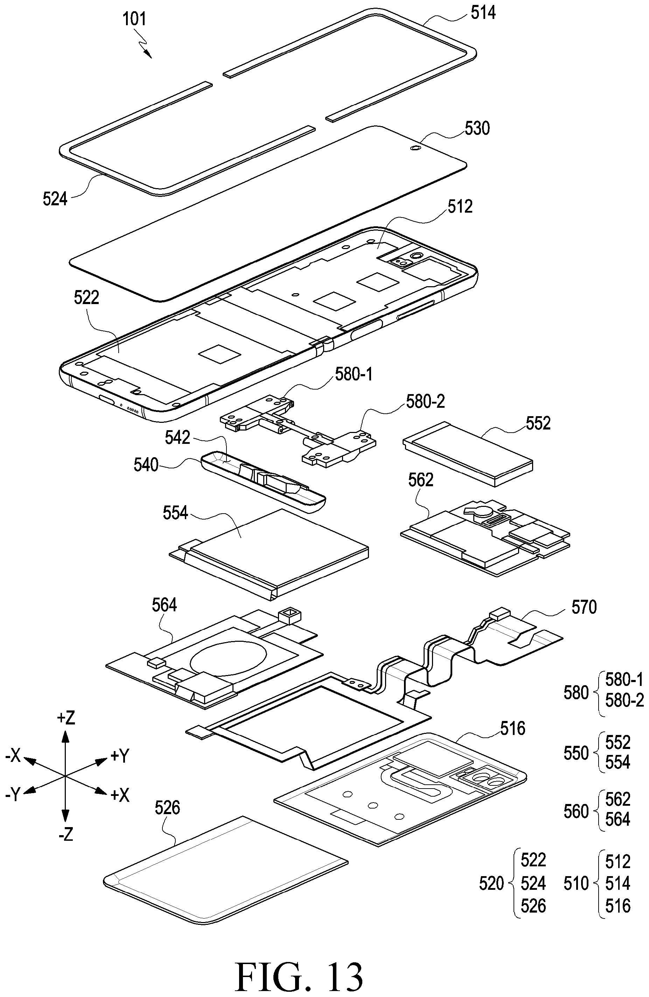

The embodiments in FIGS. 11 to 12 may be combined with the embodiments in FIGS. 1 to 10C or the embodiments in FIGS. 13 to 18B.

The configuration of the electronic device 101 in FIGS. 11 to 12 may be partially or entirely identical to the configuration of the electronic device 101 in FIG. 1.

Referring to FIGS. 11 and 12, an electronic device 101 (e.g., the electronic device 101 in FIG. 1 or the electronic device 101 in FIGS. 2A to 10C) may include a housing 502 for accommodating components (e.g., a hinge structure 580 in FIG. 13) of the electronic device 101 and a flexible display (hereinafter, a display 530) disposed inside a space formed by the housing 502. According to an embodiment, the housing 502 may be referred to as a foldable housing. According to an embodiment, the display 530 may be referred to as a foldable display.

According to an embodiment, the housing 502 may include a first housing 510 and a second housing 520 configured to rotate relative to the first housing 510.

According to an embodiment, the first housing 510 and/or the second housing 520 may constitute at least a portion of the exterior of the electronic device 101. According to an embodiment, the surface on which the display 530 is visually exposed is defined as a front surface (e.g., a first front surface 510a and a second front surface 520a) of the electronic device 101 and/or the housing 502. The opposite surface of the front surface is defined as a rear surface (e.g., a first rear surface 510b and a second rear surface 520b) of the electronic device 101. The surface surrounding at least a portion of the space between the front surface and the rear surface is defined as a side surface (e.g., a first side surface 510c and a second side surface 520c) of the electronic device 101.

According to an embodiment, the first housing 510 may be rotatably connected to the second housing 520 using a hinge structure (e.g., the hinge structure 580 in FIG. 13). For example, the first housing 510 and the second housing 520 may be rotatably connected to the hinge structure 580, respectively. Accordingly, the electronic device 101 may switch to a folded state (e.g., FIG. 12) or an unfolded state (e.g., FIG. 11). The first front surface 510a of the electronic device 101 may face the second front surface 520a in the folded state, and the direction in which the first front surface 510a faces may be substantially the same as the direction in which the second front surface 520a faces in the unfolded state. For example, in the unfolded state, the first front surface 510a may be positioned on substantially the same plane as the second front surface 520a. According to an embodiment, the second housing 520 may provide relative movement to the first housing 510.

According to an embodiment, the first housing 510 and the second housing 520 may be disposed on both sides of a folding axis A, and may have a symmetrical shape with respect to the folding axis A. The angle between the first housing 510 and the second housing 520 may vary depending on whether the electronic device 101 is in the unfolded state, the folded state, or an intermediate state between the unfolded state and the folded state.

According to an embodiment, the electronic device 101 may include a hinge cover 540. At least a portion of the hinge cover 540 may be positioned between the first housing 510 and the second housing 520. According to an embodiment, the hinge cover 540 may be covered by a portion of the first housing 510 and the second housing 520 or exposed to the outside of the electronic device 101 depending on the state of the electronic device 101. According to an embodiment, the hinge cover 540 may protect the hinge structure (e.g., the hinge structure 580 in FIG. 13) from an external impact applied to the electronic device 101. According to an embodiment, the hinge cover 540 may be interpreted as a hinge housing for protecting the hinge structure (e.g., the hinge structure 580 in FIG. 13).

According to an embodiment, as illustrated in FIG. 11, when the electronic device 101 is in the unfolded state, the hinge cover 540 may be covered by the first housing 510 and the second housing 520 so as not to be exposed. As another example, as illustrated in FIG. 12, when the electronic device 101 is in the folded state (e.g., a fully folded state), the hinge cover 540 may be exposed to the outside between the first housing 510 and the second housing 520. As another example, in an intermediate state where the first housing 510 and the second housing 520 are folded at a certain angle, the hinge cover 540 may be partially exposed to the outside between the first housing 510 and the second housing 520. However, in this case, the exposed area may be smaller than that in the fully folded state. According to an embodiment, the hinge cover 540 may include a curved surface.

According to an embodiment, the display 530 may visually provide information to the outside (e.g., a user) of the electronic device 101. The display 530 may include, for example, a holographic device, a projector, and a control circuit for controlling the device. According to an embodiment, the display 530 may include a touch sensor configured to detect a touch or a pressure sensor configured to measure the intensity of force generated by the touch.

According to an embodiment, the display 530 may indicate a display in which at least a portion of the display is able to be deformed into a flat or curved surface. For example, the display 530 may be configured to be variable in response to the relative movement between the second housing 520 and the first housing 510. According to an embodiment, the display 530 may include a folding area 533, a first display area 531 positioned on one side (e.g., in the upward (+Y-axis) direction) of the folding area 533, and a second display area 532 positioned on the other side (e.g., in the downward (-Y-axis) direction). According to an embodiment, the folding area 533 may be positioned on a hinge structure (e.g., the hinge structure 580 in FIG. 13). For example, at least a portion of the folding area 533 may face the hinge structure 580. According to an embodiment, the first display area 531 may be positioned on the first housing 510, and the second display area 532 may be positioned on the second housing 520. According to an embodiment, the display 530 may be accommodated in the first housing 510 and the second housing 520.

However, the division of the display 530 illustrated in FIG. 11 is exemplary, and the display 530 may be divided into a plurality of (e.g., four or more, or two) areas depending on the structure or function.

In addition, although the display 530 is divided by the folding area 533 extending parallel to the X-axis or the folding axis (the axis A) in the embodiment illustrated in FIG. 11, the display 530 may be divided by a different folding area (e.g., a folding area parallel to the Y-axis) or a different folding axis (e.g., a folding axis parallel to the Y-axis) in other embodiments. According to an embodiment, the display 530 may be combined with or disposed adjacent to a touch sensing circuit, a pressure sensor capable of measuring the intensity (pressure) of a touch, and/or a digitizer configured to detect a magnetic field-type stylus pen.

According to an embodiment, the electronic device 101 may include a rear display 534. The rear display 534 may be disposed to face in a different direction from the display 530. For example, the display 530 may be visually exposed through the front surface (e.g., the first front surface 510a and/or the second front surface 520a) of the electronic device 101, and the rear display 534 may be visually exposed through the rear surface (e.g., the first rear surface 510b) of the electronic device 101.

According to an embodiment, the electronic device 101 may include one or more camera modules 504 and 506 and a flash 508. According to an embodiment, the electronic device 101 may include a front camera module 504 exposed through the front surface (e.g., the first front surface 510a) and/or a rear camera module 506 exposed through the rear surface (e.g., the first rear surface 520b). The camera modules 504 and 506 may include one or more lenses, an image sensor, a flash, and/or an image signal processor. The flash 508 may include a light-emitting diode or a xenon lamp. According to an embodiment, two or more lenses (infrared camera or wide-angle and telephoto lenses) and image sensors may be disposed on one side of the electronic device 101. The configuration of the front camera module 504 and/or the rear camera module 506 may be partially or entirely identical to the configuration of the camera module 180 in FIG. 1.

According to an embodiment, the electronic device 101 may include an antenna 630 (e.g., the antenna module 197 in FIG. 1 or the antenna 630 in FIG. 14). According to an embodiment, the antenna 630 may include a first antenna 631, a second antenna 632, or a third antenna 633.

According to an embodiment, the electronic device 101 may identify an angle-of-arrival θ of a signal transmitted by an external electronic device (e.g., the external electronic device 200 in FIG. 14), based on the antennas 631, 632, and 633 of the antenna 630. This will be described later.

FIG. 13 is an exploded perspective view of an electronic device according to an embodiment of the disclosure.

The embodiment in FIG. 13 may be combined with the embodiments in FIGS. 1 to 12 or the embodiments in FIGS. 14 to 18B.

Referring to FIG. 13, an electronic device 501 may include a first housing 510, a second housing 520, a display 530, a hinge cover 540, a battery 550, a printed circuit board 560, a flexible printed circuit board 570, and a hinge structure 580. The configuration of the first housing 510, the second housing 520, the display 530, and the hinge cover 540 in FIG. 13 may be partially or entirely the same as the configuration of the first housing 510, the second housing 520, the display 530, and the hinge cover 540 in FIG. 11 and/or FIG. 12.

According to an embodiment, the electronic device 101 may include a first support member 512 and a second support member 522. For example, the first housing 510 may include a first support member 512, and the second housing 520 may include a second support member 522. According to an embodiment, the first support member 512 and/or the second support member 522 may support components (e.g., the display 530, the battery 550, and the printed circuit board 560) of the electronic device 101.

According to an embodiment, the first support member 512 and/or the second support member 522 may be formed of a metal material and/or a non-metal (e.g., polymer) material. According to an embodiment, the first support member 512 may be disposed between the display 530 and the battery 550. For example, the display 530 may be coupled to one side of the first support member 512, and the battery 550 and the printed circuit board 560 may be disposed on the other side.

According to an embodiment, the electronic device 101 may include a first protection member 514 and a second protection member 524. For example, the first housing 510 may include a first protection member 514, and the second housing 520 may include a second protection member 524. According to an embodiment, the protection members 514 and 524 may protect the display 530 from external impact. For example, the first protection member 514 may surround at least a portion of a part (e.g., the first display area 531 in FIG. 11) of the display 530, and the second protection member 524 may surround at least a portion of another part (e.g., the second display area 532 in FIG. 11) of the display 530. According to an embodiment, the first protection member 514 may be referred to as a first protection member, and the second protection member 524 may be referred to as a second protection member.

According to an embodiment, the housings 510 and 520 may include a first rear plate 516 and a second rear plate 526. For example, the first housing 510 may include a first rear plate 516 connected to a first support member 512, and the second housing 520 may include a second rear plate 526 connected to a second support member 522. According to an embodiment, the rear plates 516 and 526 may constitute a part of the exterior of the electronic device 101. For example, the first rear plate 516 may form a first rear surface (e.g., the first rear surface 510b in FIGS. 11 to 12) and the second rear plate 526 may form a second rear surface (e.g., the second rear surface 520b in FIGS. 11 to 12). According to an embodiment, the first battery 552 and the first printed circuit board 562 may be disposed between the first support member 512 and the first rear plate 516, and the second battery 554 and the second printed circuit board 564 may be disposed between the second support member 522 and the second rear plate 526.

According to an embodiment, the hinge cover 540 may accommodate at least a portion of the hinge structure 580. For example, the hinge cover 540 may include a receiving groove 542 for accommodating the hinge structure 580. According to an embodiment, the hinge cover 540 may be coupled with the hinge structure 580. According to an embodiment, when the electronic device 101 is in the unfolded state, at least a portion of the hinge cover 540 may be positioned between the hinge structure 580 and the housing 510, 520.

According to an embodiment, the battery 550 may be a device for supplying power to at least one component of the electronic device 101, and may include a non-rechargeable primary battery, a rechargeable secondary battery, or a fuel cell. The battery 550 may be integrally disposed inside the electronic device 101, and may also be disposed to be detachable from the electronic device 101. According to an embodiment, the battery 550 may include a first battery 552 disposed inside the first housing 510 and a second battery 554 disposed inside the second housing 520. For example, the first battery 552 may be disposed on the first support member 512, and the second battery 554 may be disposed on the second support member 522.

According to an embodiment, the printed circuit board 560 may be equipped with a processor (e.g., the processor 520 in FIG. 1), memory (e.g., the memory 530 in FIG. 1), and/or an interface (e.g., the interface 577 in FIG. 1) mounted thereon. According to an embodiment, the printed circuit board 560 may include a first printed circuit board 562 disposed inside a first housing 510 and a second printed circuit board 564 disposed inside a second housing 520.

According to an embodiment, a flexible printed circuit board (FPCB) 570 may electrically connect a component (e.g., the first printed circuit board 562) positioned in the first housing 510 and a component (e.g., the second printed circuit board 564) positioned in the second housing 520. According to an embodiment, at least a portion of the flexible printed circuit board 570 may cross the hinge cover 540 and/or the hinge structure 580. For example, a portion of the flexible printed circuit board 570 may be disposed inside the first housing 510, and another portion may be disposed inside the second housing 520. According to an embodiment, the flexible printed circuit board 570 may be connected to an antenna or connected to the display 530.

According to an embodiment, the hinge structure 580 may be connected to the first housing 510 and the second housing 520. According to an embodiment, the first housing 510 may rotate relative to the second housing 520 using the hinge structure 580. According to an embodiment, the hinge structure 580 may connect the first housing 510 and the second housing 520 such that they are able to rotate from the folded state (e.g., FIG. 12) to the unfolded state (e.g., FIG. 11).

According to an embodiment, the hinge structure 580 may include a plurality of hinge structures 580-1 and 580-2 arranged in parallel. For example, the hinge structure 580 may include a first hinge structure 580-1 and a second hinge structure 580-2 spaced apart from the first hinge structure 580-1. According to an embodiment, the first hinge structure 580-1 may be symmetrical with the second hinge structure 580-2, based on the longitudinal direction (e.g., Y-axis direction) of the electronic device 101.

FIG. 14 is a diagram illustrating an antenna module of an electronic device according to an embodiment of the disclosure.

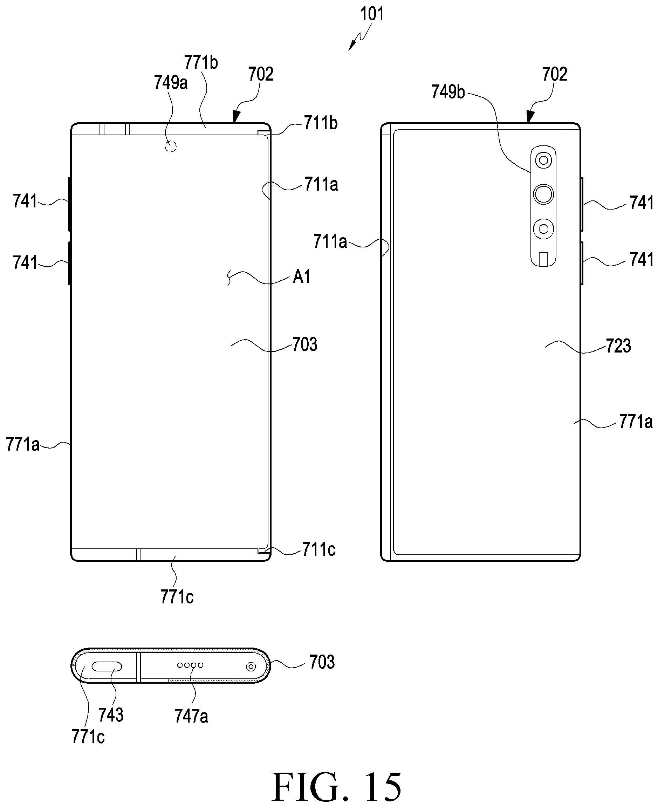

The embodiment in FIG. 14 may be combined with the embodiments in FIGS. 1 to 3 or the embodiments in FIGS. 15 to 18B.

Referring to FIG. 14, an electronic device 101 (e.g., the electronic device 101 in FIGS. 11 to 13) may include an antenna module 602 that includes a circuit board 620 or an antenna 630.

The configuration of the antenna module 602 in FIG. 14 may be partially or entirely identical to the configuration of the antenna module 402 in FIG. 9. The configuration of the circuit board 620 in FIG. 14 may be partially or entirely identical to the configuration of the circuit board 420 in FIG. 9. The configuration of the antenna 630 in FIG. 14 may be partially or entirely identical to the configuration of the antenna 630 in FIG. 11 or the antenna 430 in FIG. 9.

Referring to FIG. 14, the antenna 630 may include a first antenna 631 (e.g., the first antenna 631 in FIG. 14 or the first antenna 431 in FIG. 9), a second antenna 632 (e.g., the second antenna 632 in FIG. 14 or the second antenna 432 in FIG. 9), or a third antenna 633 (e.g., the third antenna 633 in FIG. 14 or the third antenna 433 in FIG. 9).

According to an embodiment, the circuit board 620 may include a first circuit board 621 (e.g., the first printed circuit board 562 in FIG. 13) or a second circuit board 622 (e.g., the second printed circuit board 564 in FIG. 13).

According to an embodiment, when the electronic device 101 is in the unfolded state (e.g., FIG. 11), the first circuit board 621 and the second circuit board 622 may be disposed on substantially the same plane (e.g., a plane formed by the X-axis and the Y-axis in FIGS. 13 and 14 or a plane parallel thereto).

According to an embodiment, the first antenna 631, the second antenna 632, or the third antenna 633 may be disposed on at least a portion of one surface (e.g., a surface facing the first rear plate 516 or the second rear plate 526 in FIG. 13, or a surface facing the -Z-axis direction in FIG. 14) of the circuit board 620.

According to an embodiment, the first antenna 631 and the second antenna 632 may be disposed on the first circuit board 621. In addition, the first antenna 631

and the second antenna 632 may be disposed to have a specified first distance L1 (e.g., the antenna distance L in FIG. 2C). According to an embodiment, the first distance L1 may be specified as a distance between the center (e.g., the center in the X-axis direction in FIG. 14) of the first antenna 631 and the center (e.g., the center in the X-axis direction in FIG. 14) of the second antenna 632.

According to an embodiment, the first distance L1, which is the distance between the first antenna 631 and the second antenna 632, may be designed to be equal to or less than half ($\lambda/2$) the wavelength ($\lambda$) of an RF signal (e.g., a signal for UWB communication) supported by the antenna 630.

According to an embodiment, the third antenna 633 may be disposed on the second circuit board 622. According to an embodiment, the first antenna 631 and the third antenna 633 may be disposed to have a specified second distance L2 (e.g., the antenna distance L in FIG. 2C) when the electronic device 101 is in the unfolded state (e.g., FIG. 11). According to an embodiment, the second distance L2 may be specified as a distance between the center (e.g., the center in the X-axis direction in FIG. 14) of the first antenna 631 and the center (e.g., the center in the X-axis direction in FIG. 14) of the second antenna 633 when the electronic device 101 is in the unfolded state (e.g., FIG. 11).

According to an embodiment, the second distance L2, which is the distance between the first antenna 631 and the third antenna 633, may be designed to exceed half ($\lambda/2$) the wavelength ($\lambda$) of an RF signal (e.g., a signal for UWB communication) supported by the antenna 630.

According to an embodiment, the second antenna 632 may be disposed between the first antenna 631 and the third antenna 633.

According to an embodiment, the electronic device 101 may identify (or determine) an angle-of-arrival θ of a signal transmitted by an external electronic device 200 relative to the electronic device 101, based on at least one of a combination of the first antenna 631 and the third antenna 633 or a combination of the first antenna 631 and the second antenna 632.

According to an embodiment, the electronic device 101 may identify the direction (or position) of the external electronic device 200 relative to the electronic device 101, based on the AOA method described with reference to FIG. 2C.

For example, the electronic device 101 may identify an angle-of-arrival θ of the signal transmitted by the external electronic device 200, based on the first antenna 631 (e.g., the first receiving antenna RX1 in FIG. 2C) and the third antenna 633 (e.g., the second receiving antenna RX2 in FIG. 2C). For example, the processor (e.g., the processor 120 in FIG. 1) of the electronic device 101 may identify the angle-of-arrival θ of the signal transmitted by the external electronic device 200, based on a phase difference of arrival (PDoA) of the signal of the external electronic device 200 reaching the first antenna 631 and the third antenna 633 and the second distance L2, using Equation 1 to Equation 3 described in FIG. 2C.

For example, the electronic device 101 may identify the angle-of-arrival θ of the signal transmitted by the external electronic device 200, based on the first antenna 631 (e.g., the first receiving antenna RX1 in FIG. 2C) and the second antenna 632 (e.g., the second receiving antenna RX2 in FIG. 2C). For example, the processor (e.g., the processor 120 in FIG. 1) of the electronic device 101 may identify the angle-of-arrival θ of the signal transmitted by the external electronic device 200, based on a phase difference of arrival (PDoA) of the signal of the external electronic device 200 reaching the first antenna 631 and the second antenna 632 and the first distance L1, using Equation 1 to Equation 3 described in FIG. 2C.

According to an embodiment, the processor of the electronic device 101 may detect the direction of the external electronic device 200 in real time, based on the phase differences of arrival (PDoA) of the antennas 631, 632, and 633 of the antenna 630 for the signal of the external electronic device 200 and the antenna distances L1 and L2.

According to an embodiment, the memory (e.g., the memory 130 in FIG. 1) of the electronic device 101 may store a first angle-of-arrival table including information about the angle-of-arrivals θ for the phase differences of arrival (PDoA) detected from a combination of the first antenna 631 and the third antenna 633. According to an embodiment, the first angle-of-arrival table may include information about angle-of-arrivals θ obtained through Equation 1 to Equation 3 above, based on the phase differences of arrival (PDoA) detected from the first antenna 631 and third antenna 633 and the second distance L2. For example, the memory of the electronic device 101 may store angle-of-arrivals θ matching the phase differences of arrival (PDoA). The information about angle-of-arrivals θ included in the first angle-of-arrival table may be values obtained through Equation 1 to Equation 3 above, or values obtained by correcting the obtained values according to the structure or RF signal of the electronic device 100.

According to an embodiment, the memory (e.g., the memory 130 in FIG. 1) of the electronic device 101 may store a second angle-of-arrival table including information about angle-of-arrivals θ for phase differences of arrival (PDoA) detected from a combination of the first antenna 631 and the second antenna 633. According to an embodiment, the second angle-of-arrival table may include information about angle-of-arrivals θ obtained through Equation 1 to Equation 3 above, based on the phase differences of arrival (PDoA) detected from the first antenna 631 and second antenna 632 and the first distance L1. For example, the memory of the electronic device 101 may store angle-of-arrivals θ matching the phase differences of arrival (PDoA). The information about angle-of-arrivals θ included in the above second angle-of-arrival table may be values obtained through Equation 1 to Equation 3 above, or may be values obtained by correcting the obtained values according to the structure or the RF signal of the electronic device 100.

According to an embodiment, the angle-of-arrival θ may be defined as the direction of the external electronic device 200 measured based on the reference point AC between the center of the first antenna 631 and the center of the third antenna 633 when the electronic device 101 is in the unfolded state (e.g., FIG. 11 or FIG. 14), but is not limited thereto, and the reference point defining the direction of the external electronic device 200 may vary depending on a design change.

The description with reference to FIGS. 7 to 9 may be applied to the process in which the electronic device 101 identifies the angle-of-arrival θ of the signal transmitted by the external electronic device 200 in FIGS. 11 to 14.

FIG. 15 is a diagram illustrating an electronic device in a closed state according to an embodiment of the disclosure.

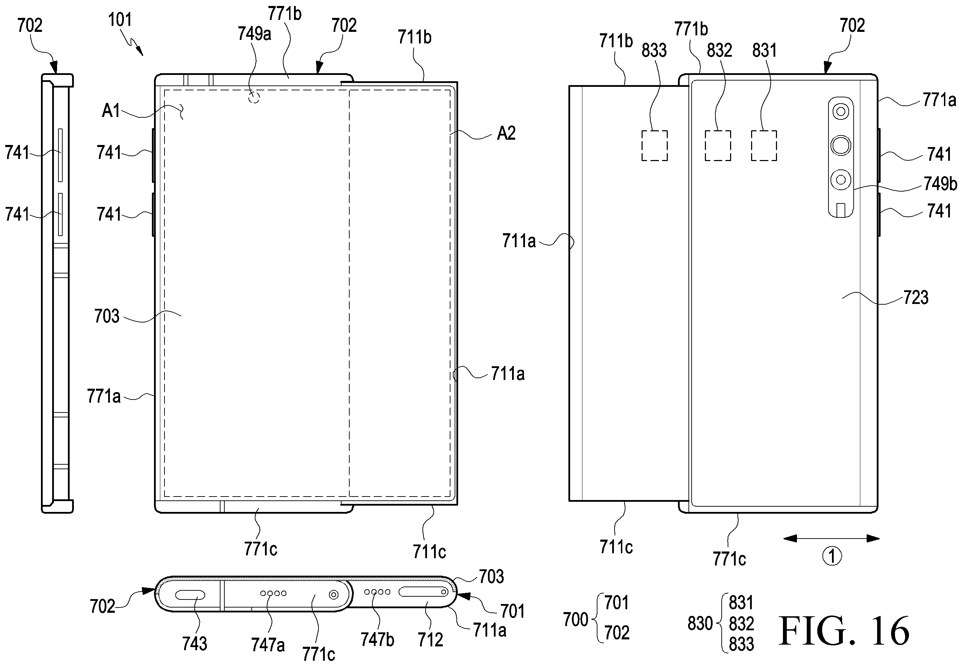

FIG. 16 is a diagram illustrating an electronic device in an open state according to an embodiment of the disclosure.

For example, FIG. 15 is a diagram showing the state in which a first display area A1 is received inside a second housing 702. FIG. 16 is a diagram showing the state in which at least a portion of the first display area A1 is visually exposed to the outside of the second housing 702.

The state shown in FIG. 15 may be referred to as the first housing 701 being closed relative to the second housing 702, and the state shown in FIG. 16 may be referred to as the first housing 701 being open relative to the second housing 702. Depending on the embodiment, the "closed state" or the "open state" may be defined as the state in which the electronic device is closed or open.

Referring to FIGS. 15 and 16, an electronic device 101 (e.g., the electronic device 101 in FIG. 1 or the electronic device 101 in FIGS. 2A to 14) may include a housing 700. According to an embodiment, the housing 700 may include a second housing 702 and a first housing 701 that is movable relative to the second housing 702. According to an embodiment, the electronic device 101 may be understood as a structure in which the second housing 702 is disposed to slide on the first housing 701. According to an embodiment, the first housing 701 may be disposed to reciprocate a predetermined distance in a direction illustrated, for example, in a direction indicated by arrow ①, relative to the second housing 702. The configuration of the electronic device 101 in FIG. 15 and FIG. 16 may be partially or entirely identical to the configuration of the electronic device 101 in FIG. 1.

According to an embodiment, the first housing 701 may be referred to as, for example, a first structure, a slide part, or a slide housing, and may be disposed to reciprocate relative to the second housing 702. According to an embodiment, the second housing 702 may be referred to as, for example, a second structure, a main part, or a main housing. According to an embodiment, the second housing 702 may accommodate at least a portion of the first housing 701 and guide the sliding movement of the first housing 701. According to an embodiment, at least a portion (e.g., a second display area A2) of the display 703 may be visually exposed to the outside of the housing 700. According to an embodiment, the housing 700 may accommodate various electrical and electronic components such as a main circuit board or a battery. According to an embodiment, a motor, a battery, a speaker, a SIM socket, and/or a sub-circuit board electrically connected to the main circuit board may be disposed in the first housing 701. A main circuit board equipped with electrical components such as an application processor (AP) and a communication processor (CP) may be disposed in the second housing 702.

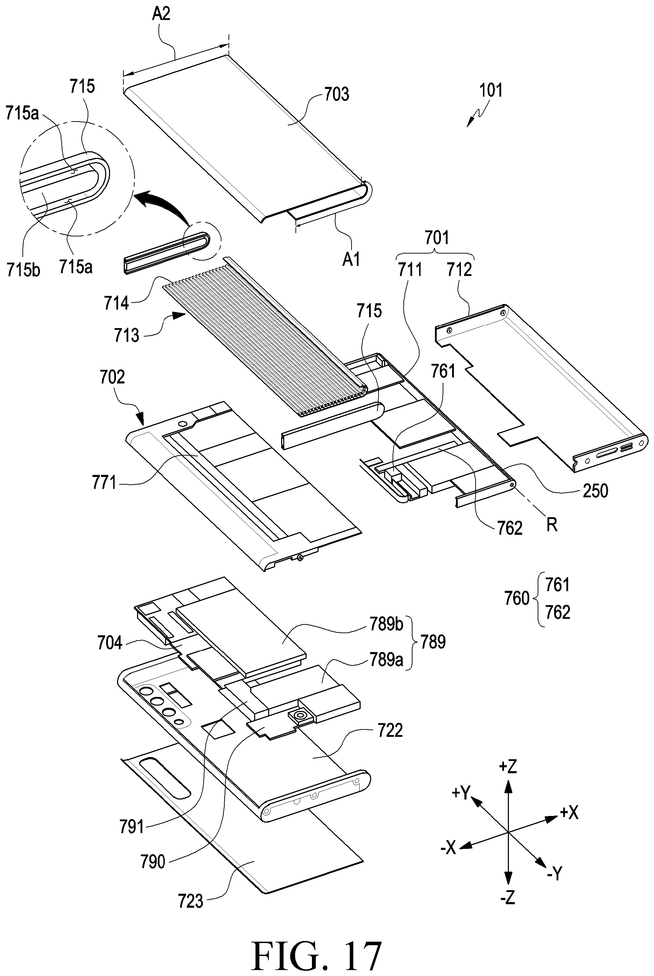

According to an embodiment, the first housing 701 may include a first plate 711 (e.g., a slide plate). According to an embodiment, the first plate 711 may support at least a portion (e.g., a second display area A2) of the display 703. According to an embodiment, the first plate 711 may include first sidewalls 711a, 711b, and 711c for surrounding at least a portion of the display 703 and/or a multi-bar structure (e.g., the multi-bar structure 713 in FIG. 17). According to an embodiment, the first sidewalls 711a, 711b, and 711c may extend from the first plate 711. According to an embodiment, the first sidewalls 711a, 711b, and 711c may include a 1-2nd sidewall 711b, a 1-3rd sidewall 711c facing in the opposite direction of the 1-2nd sidewall 711b, and a 1-1st sidewall 711a extending from the 1-1st sidewall 711b to the 1-2nd sidewall 711c. According to an embodiment, the 1-1st sidewall 711a may be substantially perpendicular to the 1-2nd sidewall 711b and/or the 1-3rd sidewall 711c. According to an embodiment, when the electronic device 101 is in the closed state (e.g., FIG. 15), the 1-2nd sidewall 711b may face a 2-2nd sidewall 721b of the second housing 702, and the 1-3rd sidewall 711c may face a 2-3rd sidewall 721c of the second housing 702. According to an embodiment, the first plate 711, the 1-1st sidewall 711a, the 1-2nd sidewall 711b, and/or the 1-3rd sidewall 711c may be formed in an integral form. According to another embodiment, the first plate 711, the 1-1st sidewall 711a, the 1-2nd sidewall 711b, and/or the 1-3rd sidewall 711c may be formed as separate housings and then coupled or assembled.

According to an embodiment, the second housing 702 may include second sidewalls 721a, 721b, and 721c for surrounding at least a portion of the first housing 701. According to an embodiment, the second sidewalls 721a, 721b, and 721c may extend from the second plate 721 and/or a cover member (e.g., the cover member 722 in FIG. 17). According to an embodiment, the second sidewalls 721a, 721b, and 721c may include a 2-2nd sidewall 721b, a 2-3rd sidewall 721c facing in the opposite direction of the 2-2nd sidewall 721b, and a 2-1st sidewall 721a extending from the 2-2nd sidewall 721b to the 2-3rd sidewall 721c. According to an embodiment, the 2-1st sidewall 721a may be substantially perpendicular to the 2-2nd sidewall 721b and/or the 2-3rd sidewall 721c. According to an embodiment, the 2-2nd sidewall 721b may face the 1-2nd sidewall 711b, and the 2-3rd sidewall 721c may face the 1-3rd sidewall 711c. For example, in the closed state of the electronic device 101 (e.g., FIG. 15), the 2-2nd side wall 721b may cover at least a portion of the 1-2nd side wall 711b, and the 2-3rd side wall 721c may cover at least a portion of the 1-3rd side wall 711c.

According to an embodiment, the second housing 702 may be formed such that one side (e.g., the front face) is open to accommodate (or surround) at least a portion of the first housing 701. For example, the first housing 701 may be connected to the second housing 702 while being at least partially surrounded by the 2-1st side wall 721a, the 2-2nd side wall 721b, and the 2-3rd side wall 721c, and may slide in the direction of arrow ① while being guided by the second housing 702. According to an embodiment, the cover member 722 (e.g., the cover member 722 in FIG. 17), the 2-1st side wall 721a, the 2-2nd side wall 721b, and/or the 2-3rd side wall 721c may be formed in an integral form. In another embodiment, the second cover member 722, the 2-1st side wall 721a, the 2-2nd side wall 721b, and/or the 2-3rd side wall 721c may be formed as separate housings and then coupled or assembled.

According to an embodiment, the second housing 702 may include a rear plate 723. According to an embodiment, the rear plate 723 may constitute at least a portion of the exterior of the electronic device 101. For example, the rear plate 723 may provide a decorative effect on the exterior of the electronic device 101.

According to an embodiment, the cover member 722 (e.g., the cover member 722 in FIG. 17) and/or the 2-1st side wall 721a may cover at least a portion of the display 703. For example, at least a portion (e.g., a first display area A1) of the display 703 may be accommodated inside the second housing 702, and the cover member 722 and/or the 2-1st sidewall 721a may cover a portion of the display 703 accommodated inside the second housing 702.

According to an embodiment, the electronic device 101 may include the display 703. For example, the display 703 may be interpreted as a flexible display or a rollable display. According to an embodiment, at least a portion (e.g., the first display area A1) of the display 703 may slide based on the sliding movement of the first housing 701. According to an embodiment, the display 703 may include or may be disposed adjacent to a touch detection circuit, a pressure sensor capable of measuring the intensity (pressure) of a touch, and/or a digitizer capable of detecting a magnetic field-type stylus pen. The configuration of the display 703 in FIGS. 15 and 16 may be partially or entirely the same as the configuration of the display module 160 in FIG. 1.

According to an embodiment, the display 703 may include a first display area A1 and a first display area A2. According to an embodiment, the second display area A2 may be an area that is always visible from the outside. According to an embodiment, the second display area A2 may be interpreted as an area that is unable to be positioned inside the housing 700 and/or the second housing 702. According to an embodiment, the first display area A1 may extend from the second display area A2 and may be inserted or received inside the second housing 702 or visually exposed to the outside of the second housing 702 according to the sliding movement of the first housing 701. According to an embodiment, the second display area A2 may be seated on a portion (e.g., the first plate 711) of the first housing 701.

According to an embodiment, the first display area A1 may move while substantially being guided by a multi-bar structure (e.g., the multi-bar structure 713 in FIG. 17) mounted inside the first housing 701 so as to be received inside the second housing 702 or a space formed between the first housing 701 and the second housing 702 or to be visually exposed to the outside of the second housing 702. According to an embodiment, the first display area A1 may move based on the sliding movement of the first housing 701 in the width direction (e.g., the direction indicated by arrow ①) thereof. For example, at least a portion of the first display area A1 may be unfolded or rolled together with the multi-bar structure (e.g., the multi-bar structure 713 in FIG. 17), based on the sliding movement of the first housing 701.

According to an embodiment, when viewed from above of the first housing 701, if the first housing 701 moves from the closed state to the open state, the first display area A1 may be gradually exposed to the outside of the housing 702, thereby forming s substantially flat surface together with the second display area A2. According to an embodiment, the first display area A1 may be at least partially receive inside the first housing 701 and/or the second housing 702.

According to an embodiment, the electronic device 101 may include at least one key input device 741, a connector hole 743, audio modules 747a and 747b, or camera modules 749a and 749b. Although not shown, the electronic device 101 may further include an indicator (e.g., an LED device) or various sensor modules. The configuration of the audio modules 747a and 747b and/or the camera modules 749a and 749b in FIG. 15 and/or FIG. 16 may be partially or entirely identical to the configuration of the audio module 170 and/or the camera module 180 in FIG. 1.

According to an embodiment, the key input device 741 may be positioned in one area of the second housing 702. Depending on the appearance and usage state, the electronic device 101 may be designed such that at least one of the illustrated key input devices 741 is excluded or such that additional key input devices are included. According to an embodiment, the electronic device 101 may include a key input device, which is not illustrated, such as a home key button or a touch pad disposed around the home key button. In another embodiment (not shown), at least some of the key input devices 741 may be disposed on the first housing 701.

According to an embodiment, the connector hole 743 may be omitted depending on the embodiment and may receive a connector (e.g., a USB connector) for transmitting and receiving power and/or data to and from the external electronic device. Although not illustrated, the electronic device 101 may include a plurality of connector holes 743, and some of the plurality of connector holes 743 may function as connector holes for transmitting and receiving audio signals to and from the external electronic device. In the illustrated embodiment, although the connector hole 743 is disposed on the 2-3 side wall 721c, the disclosure is not limited thereto, and the connector hole 743 or an unillustrated connector hole may be disposed on the 2-1st side wall 721a or the 2-2nd side wall 721b.

According to an embodiment, the audio modules 747a and 747b may include one or more speaker holes 747a and 747b and/or at least one microphone hole. At least one of the speaker holes 747a and 747b may be provided as an external speaker hole. At least one of the speaker holes 747a and 747b may be provided as a receiver hole for voice calls. The electronic device 101 may include a microphone for acquiring sound, and the microphone may acquire sound from outside the electronic device 101 through the microphone hole. According to an embodiment, the electronic device 101 may include a plurality of microphones to detect the direction of sound. According to an embodiment, the electronic device 101 may include an audio module in which the speaker holes 747a and 747b and the microphone hole are implemented as one hole, or may include a speaker (e.g., a piezo speaker) that excludes the speaker hole 747a.

According to an embodiment, the camera modules 749a and 749b may include a first camera module 749a and/or a second camera module 749b. The second camera module 749b may be positioned in the second housing 702 and may photograph a subject from the opposite direction of the second display area A2 of the display 703. The electronic device 101 may include a plurality of camera modules 749a and 749b. For example, the electronic device 101 may include at least one of a wide-angle camera, a telephoto camera, or a close-up camera, and may include an infrared projector and/or an infrared receiver, depending on the embodiment, thereby measuring the distance to the subject. The camera modules 749a and 749b may include one or more lenses, an image sensor, and/or an image signal processor. The electronic device 101 may further include another camera module (a first camera module 749a) (e.g., a front camera) that photographs the subject from the opposite direction of the second camera module 749b. For example, the first camera module 749a may be disposed around the second display area A2 or in an area overlapping the second display area A2 and, when disposed in an area overlapping the display 703, may photograph the subject through the display 703.

According to an embodiment, an indicator (e.g., an LED device) of the electronic device 101 may be disposed in the first housing 701 and/or the second housing 702, and may include a light-emitting diode to provide status information of the electronic device 101 as a visual signal. A sensor module (e.g., the sensor module 176 in FIG. 1) of the electronic device 101 may generate an electric signal or a data value corresponding to an internal operating state of the electronic device 101 or an external environmental state. The sensor module may include, for example, a proximity sensor, a fingerprint sensor, or a biometric sensor (e.g., an iris/facial recognition sensor or an HRM sensor). In another embodiment, the electronic device 101 may further include at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. The configuration of the display 703, audio modules 747a and 747b, and camera modules 749a and 749b in FIG. 15 and FIG. 16 may be partially or entirely identical to the configuration of the display module 160, audio module 170, and camera module 180 in FIG. 1.

According to an embodiment, the electronic device 101 may include an antenna 830 (e.g., the antenna module 197 in FIG. 1 or the antenna 830 in FIGS. 18A to 18B). According to an embodiment, the antenna 830 may include a first antenna 831, a second antenna 832, or a third antenna 833.

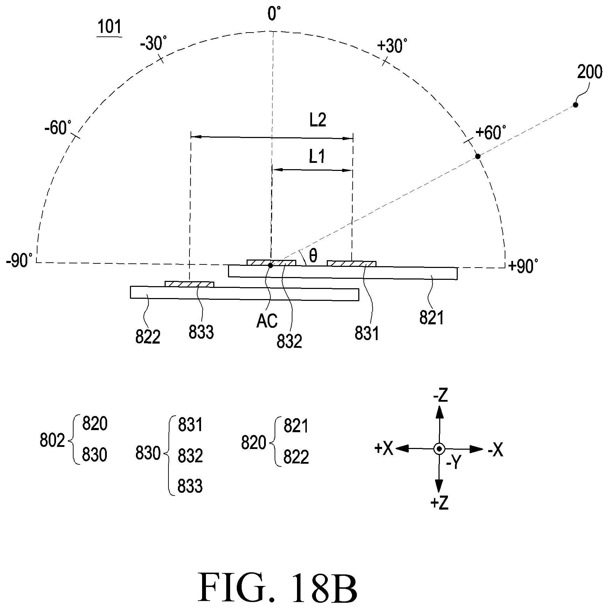

According to an embodiment, the electronic device 101 may identify an angle-of-arrival θ of a signal transmitted by an external electronic device (e.g., external electronic device 200 in FIG. 18B), based on the antennas 831, 832, and 833 of the antenna 830. This will be described later.

FIG. 17 is an exploded perspective view of an electronic device according to an embodiment of the disclosure.

The embodiment in FIG. 17 may be combined with the embodiments in FIGS. 1 to 16 or the embodiments in FIGS. 18A to 18B.

Referring to FIG. 17, the electronic device 101 may include a first housing 701, a second housing 702, a display 703, and/or a multi-bar structure 713. A portion (e.g., a first display area A1) of the display 703 may be received inside the electronic device 101 while being guided by the multi-bar structure 713. The configuration of the first housing 701, the second housing 702, and/or the display 703 in FIG. 17 may be partially or entirely the same as the configuration of the first housing 701, the second housing 702, and/or the display 703 in FIG. 15 and/or FIG. 16.

According to an embodiment, the first housing 701 may include a first plate 711 and a slide cover 712. The first plate 711 and the slide cover 712 (e.g., a first cover) may reciprocate in a straight line along one direction (e.g., the direction of arrow ① in FIG. 16 or the X-axis direction in FIG. 17) while being guided by the second housing 702. According to an embodiment, the first plate 711 may slide relative to the second housing 702 together with the slide cover 712. For example, at least a portion of the display 703 and/or at least a portion of the multi-bar structure 713 may be positioned between the first plate 711 and the slide cover 712. According to an embodiment, the slide cover 712 may be coupled to the first plate 711 and configured to cover at least a portion of the first display area A1.

According to an embodiment, the first plate 711 may support at least a portion (e.g., the first display area A1) of the display 703. For example, the first plate 711 may include a curved surface 750, and the first display area A1 of the display 703 (e.g., the first display area A1 in FIGS. 15 to 16) may be positioned on the curved surface 750. According to an embodiment, the first plate 711 may be interpreted as a display support bar (DSB).

According to an embodiment, the slide cover 712 may protect the display 703 positioned on the first plate 711. For example, at least a portion of the display 703 may be positioned between the first plate 711 and the slide cover 712. According to an embodiment, the first plate 711 and the slide cover 712 may be formed of a metal material and/or a non-metal (e.g., polymer) material.

According to an embodiment, the first housing 701 may include a first guide rail 715. According to an embodiment, the first guide rail 715 may be connected to the first plate 711 and/or the slide cover 712. For example, the first guide rail 715 may slide relative to the second housing 702 together with the first plate 711 and the second slide cover 712.

According to an embodiment, the electronic device 101 may include a multi-bar structure 713. According to an embodiment, the multi-bar structure 713 may support the display 703. For example, the multi-bar structure 713 may be connected to the display 703. According to an embodiment, at least a portion of the display 703 and the multi-bar structure 713 may be positioned between the first plate 711 and the slide cover 712. According to an embodiment, as the first housing 701 slides, the multi-bar structure 713 may move relative to the second housing 702. In the closed state (e.g., FIG. 15), most of the multi-bar structure 713 may be received inside the second housing 702. According to an embodiment, at least a portion of the multi-bar structure 713 may move corresponding to a curved surface 750 positioned at the edge of the first plate 711.

According to an embodiment, the multi-bar structure 713 may include a plurality of bars 714 (or rods). The plurality of rods 714 may extend in a straight line so as to be parallel to a rotational axis R formed by the curved surface 750, and may be arranged along a direction (e.g., a direction in which the first housing 701 slides or the X-axis direction in FIG. 17) perpendicular to the rotational axis R.

According to an embodiment, each rod 714 may rotate around the adjacent rod 714 while remaining parallel to the adjacent rod 714. According to an embodiment, as the first housing 701 slides, the plurality of rods 714 may be arranged to form a curved shape or a flat shape. For example, as the first housing 701 slides, a portion of the multi-bar structure 713 facing the curved surface 750 may form a curved surface, and another portion of the multi-bar structure 713 not facing the curved surface 750 may form a flat surface. According to an embodiment, the first display area A1 of the display 703 may be mounted or supported on the multi-bar structure 713, and at least a portion of the first display area A1 may be exposed to the outside of the second housing 702 together with the second display area A2 in the open state (e.g., FIG. 16). In the state where the first display area A1 is exposed to the outside of the second housing 702, the multi-bar structure 713 may substantially form a plane to support or maintain the first display area A1 in a flat state. According to an embodiment, the multi-bar structure 713 may be replaced with a bendable integral support member (not shown). According to an embodiment, the multi-bar structure 713 may be interpreted as a display support multi-bar or a multi-joint hinge structure.

According to an embodiment, the first guide rail 715 may guide the movement of the plurality of rods 714. According to an embodiment, the first guide rail 715 may include an upper guide rail adjacent to the 1-2nd side wall (e.g., the 1-2nd side wall 711b in FIG. 16) and a lower guide rail adjacent to the 1-3rd side wall (e.g., the 1-3rd side wall 711c in FIG. 16). According to an embodiment, the first guide rail 715 may include a groove-shaped rail 715a formed on the inner side of the guide rail 751 and a protruding portion 715b positioned inside the guide rail. At least a portion of the protruding portion 715b may be surrounded by the rail 715a. According to an embodiment, the multi-bar structure 713 may be positioned between the upper guide rail and the lower guide rail, and may move while being engaged with the upper guide rail and the lower guide rail. For example, the upper portion and/or the lower portion of the plurality of rods 714 may slide along the rail 715a while being engaged with the rail 715a.

According to an embodiment, when the electronic device 101 is opened (e.g., a slide-out operation), the size of the area where the display 703 is exposed to the outside may increase. For example, the first plate 711 connected to the motor 761 may slide out by the driving of the motor 761 (e.g., driving for display slide-out) and/or an external force from the user, and the protruding portion 715b inside the first guide rail 715 may push the upper portions and/or the lower portions of the plurality of rods 714. Accordingly, the display 703 accommodated between the first plate 711 and the slide cover 712 may expand to the front.

According to an embodiment, when the electronic device 101 is closed (e.g., a slide-in operation), the size of the area where the display 703 is exposed to the outside may be reduced. For example, the first plate 711 on which the motor is disposed may slide in by the driving of the motor 761 (e.g., driving for display slide-in and/or an external force from the user), and the outer portion of the first guide rail 715 (e.g., a portion other than the protruding portion 715b) may push the upper portions and/or the lower portions of the plurality of rods 714. Accordingly, the expanded display 703 may be accommodated between the first plate 711 and the slide cover 712.

According to an embodiment, the second housing 702 may include a second plate 721, a cover member 722 (e.g., a second cover), and a rear plate 723. According to an embodiment, the second plate 721 may support at least a portion (e.g., a second display area A2) of the display 703. The second plate 721 may be positioned between the display 703 and the main circuit board 704. According to an embodiment, the cover member 722 may accommodate components (e.g., a battery 789 (e.g., the battery 189 in FIG. 1) and the main circuit board 704) of the electronic device 101, and protect the components of the electronic device 101. According to an embodiment, the cover member 722 may be referred to as a book cover. According to an embodiment, the second plate 721 may include one side facing at least a portion of the display 703 and the other side facing in the opposite direction of the one side and facing the cover member 722.

According to an embodiment, a plurality of boards may be accommodated in the second housing 702. The main circuit board 704 may be equipped with a processor, memory, and/or an interface. The processor may include, for example, one or more of a central processing unit, an application processor, a graphics processing unit, an image signal processor, a sensor hub processor, or a communication processor. According to an embodiment, the main circuit board 704 may include a flexible printed circuit board-type radio frequency cable (FRC). For example, the main circuit board 704 may be disposed inside the cover member 722 and may be electrically connected to an antenna module (e.g., the antenna module 197 in FIG. 1) and a communication module (e.g., the communication module 190 in FIG. 1).

According to an embodiment, the memory may include, for example, volatile memory or non-volatile memory.

According to an embodiment, the interface may include, for example, a high-definition multimedia interface (HDMI), a universal serial bus (USB) interface, an SD card interface, and/or an audio interface. The interface may electrically or physically connect the electronic device 101 with an external electronic device, and may include, for example, a USB connector, an SD card/MMC connector, or an audio connector.

According to an embodiment, the electronic device 101 may further include a separate sub-circuit board 790 spaced apart from the main circuit board 704 inside the second housing 702. The sub-circuit board 790 may be electrically connected to the main circuit board 704 via a flexible board 791. The sub-circuit board 790 may be electrically connected to electrical components disposed at an end of the electronic device 101, such as the battery 789, a speaker, and/or a SIM socket, thereby transmitting signals and power.

According to an embodiment, the battery 789 is a device for supplying power to at least one component of the electronic device 101, and may include, for example, a non-rechargeable primary battery, a rechargeable secondary battery, or a fuel cell. At least a portion of the battery 789 may be disposed on substantially the same plane as, for example, the main circuit board 704. The battery 789 may be disposed integrally inside the electronic device 101, or may be disposed detachably from the electronic device 101.

According to an embodiment, the battery 789 may be configured as a single integral battery or may include multiple detachable batteries (e.g., a first battery 789a and a second battery 789b). According to an embodiment, when the integral battery is positioned on the first plate 711, the integral battery may move along with the sliding movement of the first plate 711. According to another embodiment, when the integral battery is positioned on the second plate 721, the integral battery may be fixed onto the second plate 721, regardless of the sliding movement of the first plate 711. According to another embodiment, when the first battery 789a among the detachable batteries is positioned on the first plate 711 and the second battery 789b among the detachable batteries is fixed onto the second plate 721, only the first battery 789a may move along with the sliding movement of the first plate 711.

According to an embodiment, the rear plate 723 may substantially form at least a portion of the exterior of the second housing 702 or the electronic device 101. For example, the rear plate 723 may be coupled to the outer surface of the cover member 722. According to an embodiment, the rear plate 723 may be formed integrally with the cover member 722. According to an embodiment, the rear plate 723 may provide a decorative effect to the exterior of the electronic device 101. The second plate 721 and the cover member 722 may be manufactured using at least one of metal or polymer, and the rear plate 723 may be manufactured using at least one of metal, glass, synthetic resin, or ceramic. According to an embodiment, the second plate 721, the cover member 722, and/or the rear plate 723 may be manufactured using a material that is at least partially transparent (e.g., an auxiliary display area) to light. For example, in the state where a portion (e.g., the first display area A1) of the display 703 is received inside the electronic device 101, the electronic device 101 may output visual information using the first display area A1. The auxiliary display area may be a portion of the second plate 721, the cover member 722, and/or the rear plate 723 on which the display 703 received inside the second housing 702 is positioned.

According to an embodiment, the electronic device 101 may include a driving unit 760 configured to provide a driving force for sliding movement to the first housing 701. According to an embodiment, the driving unit 760 may include a motor 761 and a gear structure 762 (e.g., a rack gear and/or a pinion gear) connected to the motor 761. For example, the electronic device 101 may include a motor 761 connected and/or coupled to the first housing 701 (e.g., the first plate 711). According to an embodiment, the gear structure 762 may include a rack gear connected and/or coupled to the second housing 702 (e.g., the second plate 721) and/or a pinion gear connected to the motor. According to an embodiment, the pinion gear may be rotated by receiving driving force from the motor 761, and the pinion gear and the motor 761 may slide in one direction (e.g., in the X-axis direction in FIG. 17) on the rack gear, and the first housing 701 (e.g., the first plate 711) connected to the motor 761 may slide in one direction (e.g., in the X-axis direction in FIG. 17) together with the motor 761.

According to an embodiment, the motor 761 may be connected and/or coupled to the second housing 702 (e.g., the second plate 721), and the gear structure 762 may have at least a portion (e.g., the rack gear) connected and/or coupled to the first housing 701 (e.g., the first plate 711). According to an embodiment, the pinion gear may rotate according to the rotation of the motor 761 so that the rack gear connected to the pinion gear may slide in one direction (e.g., in the X-axis direction in FIG. 17), and the first housing (e.g., the first plate 711) connected to the rack gear may slide in one direction (e.g., in the X-axis direction in FIG. 17) together with the rack gear.

FIG. 18A is a diagram illustrating an antenna module of an electronic device according to an embodiment of the disclosure. FIG. 18B is a diagram illustrating an antenna module of an electronic device according to an embodiment of the disclosure. FIG. 18A shows the antenna module in a closed state of the electronic device (e.g., FIG. 15), and FIG. 18B shows the antenna module in an open state of the electronic device (e.g., FIG. 16).

The embodiments in FIGS. 18A and 18B may be combined with the embodiments in FIGS. 1 to 17.

Referring to FIGS. 18A and 18B, an electronic device 101 (e.g., the electronic device 101 in FIGS. 15 to 17) may include an antenna module 802 including a circuit board 820 or an antenna 830.

The configuration of the antenna module 802 in FIGS. 18A to 18B may be partially or entirely identical to the configuration of the antenna module 402 in FIG. 9 or the configuration of the antenna module 602 in FIG. 14. The configuration of the circuit board 820 in FIGS. 18A to 18B may be partially or entirely identical to the configuration of the circuit board 420 in FIG. 9 or the configuration of the circuit board 620 in FIG. 14. The configuration of the antenna 830 in FIGS. 18A to 18B may be partially or entirely identical to the configuration of the antenna 430 in FIG. 9 or the configuration of the antenna 630 in FIG. 14.

Referring to FIGS. 18A to 18B, the antenna 830 may include a first antenna 831 (e.g., the first antenna 831 in FIGS. 18A to 18B or the first antenna 431 in FIG. 9), a second antenna 832 (e.g., the second antenna 832 in FIGS. 18A to 18B or the second antenna 432 in FIG. 9), or a third antenna 833 (e.g., the third antenna 833 in FIGS. 18A to 18B or the third antenna 433 in FIG. 9).

According to an embodiment, the circuit board 820 may include a first circuit board 821 (e.g., the first circuit board 621 in FIG. 14) or a second circuit board 822 (e.g., the second circuit board 622 in FIG. 14).

According to an embodiment, the first circuit board 821 may be disposed on one side (e.g., the side facing in the -Z direction in FIG. 17) of the second plate (e.g., the second plate 721 in FIG. 17). According to an embodiment, the second circuit board 822 may be disposed on one side (e.g., the side facing in the -Z direction in FIG. 17) of the first plate (e.g., the first plate 711 in FIG. 17).

According to an embodiment, the second circuit board 822 may slide together with the first plate when the electronic device 101 is opened (e.g., FIG. 16).

According to an embodiment, the first antenna 831, the second antenna 832, or the third antenna 833 may be disposed on at least a portion of one side of the circuit board 820 (e.g., the side facing the rear plate 723 in FIG. 17 when the electronic device is in the closed state (e.g., FIG. 15) or the side facing in the -Z direction in FIGS. 18A to 18B).

According to an embodiment, the first antenna 831 and the second antenna 832 may be disposed on the first circuit board 821. In addition, the first antenna 831 and the second antenna 832 may be disposed to have a first distance L1 (e.g., the antenna distance L in FIG. 2C) that is a specified distance. According to an embodiment, the first distance L1 may be specified as a distance between the center (e.g., the center in the X-axis direction in FIGS. 18A to 18B) of the first antenna 831 and the center (e.g., the center in the X-axis direction in FIGS. 18A to 18B) of the second antenna 832.

According to an embodiment, the first distance L1, which is the distance between the first antenna 831 and the second antenna 832, may be designed to be equal to or less than half ($\lambda/2$) the wavelength ($\lambda$) of an RF signal (e.g., a signal for UWB communication) supported by the antenna 830.

According to an embodiment, the third antenna 833 may be disposed on the second circuit board 822. According to an embodiment, the first antenna 831 and the third antenna 833 may be disposed to have a second distance L2 (e.g., the antenna distance L in FIG. 2C) that is a specified distance when the electronic device 101 is in the open state (e.g., FIG. 16 or FIG. 18B). According to an embodiment, the second distance L2 may be specified as a distance between the center (e.g., the center in the X-axis direction in FIGS. 18A to 18B) of the first antenna 831 and the center (e.g., the center in the X-axis direction in FIGS. 18A to 18B) of the second antenna 833 when the electronic device 101 is in a fully open state (e.g., FIG. 16).

According to an embodiment, the first antenna 831 and the third antenna 833 may be disposed to have a third distance L3, which is smaller than the second distance L2, when the electronic device 101 is in the closed state (e.g., FIG. 15 or FIG. 18A).

According to an embodiment, when the device 101 is in the open state (e.g., FIG. 16 or FIG. 18B), the second distance L2, which is the distance between the first antenna 831 and the third antenna 833, may be designed to exceed half (λ/2) the wavelength (λ) of an RF signal (e.g., a signal for UWB communication) supported by the antenna 830.

According to an embodiment, the second antenna 832 may be disposed between the first antenna 831 and the third antenna 833.

According to an embodiment, the electronic device 101 may identify (or determine) an angle-of-arrival θ of a signal transmitted by the external electronic device 200 relative to the electronic device 101, based on at least one of a combination of the first antenna 831 and the third antenna 833 or a combination of the first antenna 831 and the second antenna 832.

According to an embodiment, the electronic device 101 may identify the direction (or position) of the external electronic device 200 relative to the electronic device 101, based on the AOA method described with reference to FIG. 2C.

For example, the electronic device 101 may identify an angle-of-arrival θ of the signal transmitted by the external electronic device 200, based on the first antenna 831 (e.g., the first receiving antenna RX1 in FIG. 2C) and the third antenna 833 (e.g., the second receiving antenna RX2 in FIG. 2C). For example, the processor (e.g., the processor 120 in FIG. 1) of the electronic device 101 may identify the angle-of-arrival θ of the signal transmitted by the external electronic device 200, based on the phase difference of arrival (PDoA) of the signal of the external electronic device 200 reaching the first antenna 831 and the third antenna 833 and the second distance L2, using Equation 1 to Equation 3 described in FIG. 2C.

For example, the electronic device 101 may identify the angle-of-arrival θ of the signal transmitted by the external electronic device 200, based on the first antenna 831 (e.g., the first receiving antenna RX1 in FIG. 2C) and the second antenna 832 (e.g., the second receiving antenna RX2 in FIG. 2C). For example, the processor (e.g., the processor 120 in FIG. 1) of the electronic device 101 may identify the angle-of-arrival θ of the signal transmitted by the external electronic device 200, based on the phase difference of arrival (PDoA) of the signal of the external electronic device 200 reaching the first antenna 831 and the second antenna 832 and the first distance L1, using Equation 1 to Equation 3 described in FIG. 2C.

According to an embodiment, the processor of the electronic device 101 may detect the direction of the external electronic device 200 in real time, based on the phase differences of arrival (PDoA) of the antennas 831, 632, and 633 of the antenna 830 for the signal of the external electronic device 200 and the antenna distances L1 and L2.

According to an embodiment, the memory (e.g., the memory 130 in FIG. 1) of the electronic device 101 may store a first angle-of-arrival table including information about the angle-of-arrivals θ for the phase difference of arrival (PDoA) detected from a combination of the first antenna 831 and the third antenna 833. According to an embodiment, the first angle-of-arrival table may include information about angle-of-arrivals θ obtained through Equation 1 to Equation 3 above, based on the phase differences of arrival (PDoA) detected from the first antenna 831 and the third antenna 833 and the second distance L2. For example, the memory of the electronic device 101 may store angle-of-arrivals θ matching the phase differences of arrival (PDoA). The information about angle-of-arrivals θ included in the first angle-of-arrival table may be values obtained through Equation 1 to Equation 3 above, or values obtained by correcting the obtained values according to the structure or RF signal of the electronic device 100

According to an embodiment, the memory (e.g., the memory 130 in FIG. 1) of the electronic device 101 may store a second angle-of-arrival table including information about angle-of-arrivals θ for phase differences of arrival (PDoA) detected from a combination of the first antenna 831 and the second antenna 833. According to an embodiment, the second angle-of-arrival table may include information about angle-of-arrivals θ obtained through Equation 1 to Equation 3 above, based on the phase differences of arrival (PDoA) detected from the first antenna 831 and second antenna 832 and the first distance L1. For example, the memory of the electronic device 101 may store angle-of-arrivals θ matching the phase differences of arrival (PDoA). The information about angle-of-arrivals θ included in the above second angle-of-arrival table may be values obtained through Equation 1 to Equation 3 above, or may be values obtained by correcting the obtained values according to the structure or the RF signal of the electronic device 100

According to an embodiment, the processor of the electronic device 101 may be configured to identify the angle-of-arrival θ of the signal transmitted by the external electronic device 200, assuming that the first antenna 831 and the third antenna 833 are disposed on the same plane (e.g., the plane formed by the X-axis and the Y-axis in FIG. 18B or a plane parallel thereto) when the electronic device 101 is in the open state.

According to an embodiment, the angle-of-arrival θ may be defined as the direction of the external electronic device 200 measured based on the reference point AC between the center of the first antenna 831 and the center of the third antenna 833 when the electronic device 101 is in the open state (e.g., FIG. 16 or FIG. 18B), but is not limited thereto, and the reference point defining the direction of the external electronic device 200 may vary depending on a design change

The description with reference to FIG. 7 to FIG. 9 may be applied to the process in which the electronic device 101 in FIG. 15 to FIG. 18B identifies the angle-of-arrival θ of the signal transmitted by the external electronic device 200.

The ultra-wideband (UWB) is a short-range wireless communication protocol that uses radio waves like Bluetooth or Wi-Fi, and is a wireless technology capable of precisely measuring distances with a margin of error of centimeters (cm) using a wideband frequency of 500 MHz or more. An electronic device using UWB technology may transmit and receive data with low power across a wide frequency band.

An electronic device may measure or identify the direction (or position) of an external electronic device relative to an electronic device, such as the azimuth or altitude of the external electronic device, based on UWB communication.

According to an embodiment of the disclosure, there may be provided an antenna structure with improved measurement reliability of an angle-of-arrival of an external electronic device, and an electronic device including the same.

However, the problems to be solved in the disclosure are not limited to the problems mentioned above, and may be identified in various ways without departing from the idea and scope of the disclosure.

According to an embodiment of the disclosure, the measurement reliability of the direction (or position) of an external electronic device measured by an electronic device may be improved.

The effects obtainable from the disclosure are not limited to the effects mentioned above, and other effects that are not mentioned will be clearly understood by those skilled in the art to which the disclosure belongs from the description below.

According to an embodiment of the disclosure, an electronic device (e.g., the electronic device 101 in FIGS. 1 to 6 or the electronic device 101 in FIGS. 9 to 18B) may include a housing (e.g., the housing 310 in FIGS. 9 or 3 to 4, the housing 410 in FIG. 7, the housing 410 in FIGS. 10A to 10C, the housing 520 in FIG. 11, or the housing 610 in FIG. 16), a circuit board (e.g., the circuit board 420 in FIG. 6, the circuit board 420 in FIG. 9, the circuit board 620 in FIG. 14, or the circuit board 820 in FIGS. 18A to 18B), an antenna (e.g., the antenna 430 in FIG. 6, the antenna 430 in FIG. 9, the antenna 630 in FIG. 14, or the antenna 830 in FIGS. 18A to 18B), or at least one processor (e.g., the processor 120 in FIG. 1 or the processor 440 in FIG. 6). The circuit board may be disposed inside the housing. The antenna module may be disposed on the circuit board. The antenna may include a first antenna (e.g., the first antenna 431 in FIG. 6, the first antenna 431 in FIG. 9, the first antenna 631 in FIG. 14, or the first antenna 831 in FIGS. 18A to 18B), a second antenna (e.g., the second antenna 432 in FIG. 6, the second antenna 432 in FIG. 9, the second antenna 632 in FIG. 14, or the second antenna 832 in FIGS. 18A to 18B), or a third antenna (e.g., the third antenna 433 in FIG. 6, the third antenna 433 in FIG. 9, the third antenna 633 in FIG. 14, or the third antenna 833 in FIGS. 18A to 18B). The second antenna may be spaced apart from the first antenna. The third antenna may be spaced farther apart from the first antenna than the second antenna. The at least one processor may obtain a plurality of first angle-of-arrival values defined as a direction of an external electronic device relative to the electronic device, based on a first phase difference of arrival (first PDoA) of a signal of the external electronic device received through the first antenna and the third antenna. The at least one processor may obtain a second angle-of-arrival value defined as a direction of the external electronic device relative to the electronic device, based on a second phase difference of arrival (second PDoA) of a signal of the external electronic device received through the first antenna and the second antenna. The at least one processor may be configured to identify a value, which is closest to the second angle-of-arrival value, among the plurality of first angle-of-arrival values, as an angle-of-arrival of the external electronic device.

According to an embodiment, the second antenna may be disposed between the first antenna and the third antenna.

According to an embodiment, the first antenna and the second antenna may be spaced apart by a first distance (e.g., the first distance L1 in FIG. 9, the first distance L1 in FIG. 14, or the first distance L1 in FIGS. 18A to 18B). The first antenna and the third antenna may be spaced apart by a second distance (e.g., the second distance L2 in FIG. 9, the second distance L2 in FIG. 14, or the second distance L2 in FIG. 18B) greater than the first distance.

According to an embodiment, the first distance may be configured to be less than or equal to half a wavelength of a frequency band supported by the antenna.

According to an embodiment, the second distance may be configured to be greater than half a wavelength of a frequency band supported by the antenna.

According to an embodiment, the housing (e.g., the housing 502 in FIG. 11) may include a first housing (e.g., the first housing 510 in FIGS. 11 to 13) or a second housing (e.g., the second housing 520 in FIGS. 11 to 13). The second housing may be rotatably connected to the first housing. The circuit board (e.g., the circuit board 620 in FIG. 14) may include a first circuit board (e.g., first circuit board 621 in FIG. 14) and a second circuit board (e.g., second circuit board 622 in FIG. 14). The first circuit board may be disposed in the first housing. The second circuit board may be disposed in the second housing.

According to an embodiment, the first antenna (e.g., the first antenna 631 in FIG. 14) and the second antenna (e.g., the second antenna 632 in FIG. 14) may be disposed on the first circuit board. The third antenna (e.g., the third antenna 633 in FIG. 14) may be disposed on the second circuit board.

According to an embodiment, the second distance (e.g., the second distance L2 in FIG. 14) may be a distance between the first antenna and the third antenna when the first housing and the second housing are in an unfolded state (e.g., FIG. 11).

According to an embodiment, the housing (e.g., the housing 700 in FIGS. 15 to 16) may include a second housing (e.g., the second housing 702 in FIGS. 15 to 16) or a first housing (e.g., the first housing 701 in FIGS. 15 to 16). The first housing may be configured to slide relative to the second housing. The circuit board (e.g., the circuit board 820 in FIGS. 18A to 18B) may include a first circuit board (e.g., the first circuit board 821 in FIGS. 18A to 18B) or a second circuit board (e.g., the second circuit board 822 in FIGS. 18A to 18B). The first circuit board may be disposed in the second housing. The second circuit board may be disposed in the first housing.

According to an embodiment, the first antenna (e.g., the first antenna 831 in FIGS. 18A to 18B) and the second antenna (e.g., the second antenna 832 in FIGS. 18A to 18B) may be disposed on the first circuit board. The third antenna (e.g., the third antenna 833 in FIGS. 18A to 18B) may be disposed on the second circuit board.

According to an embodiment, the second distance (e.g., the second distance L2 in FIG. 18B) may be a distance between the first antenna and the third antenna when the first housing is in a slide-out state relative to the second housing (e.g., FIG. 16).

According to an embodiment, the first antenna, the second antenna, and the third antenna may be disposed on substantially the same plane.

According to an embodiment, at least one of the first antenna, the second antenna, or the third antenna may be a patch antenna.

According to an embodiment, the electronic device may further include a UWB communication module (e.g., the UWB communication module 190 in FIG. 1) electrically connected to the antenna.

According to an embodiment, the electronic device may further include a switching circuit (e.g., the switching circuit 450 in FIG. 9) configured to selectively connecting the processor to the second antenna or the third antenna.

According to an embodiment of the disclosure, an electronic device (e.g., the electronic device 101 in FIGS. 1 to 6 or the electronic device 101 in FIGS. 9 to 18B) may include a housing (e.g., the housing 310 in FIGS. 9 or 3 to 4, the housing 410 in FIG. 7, the housing 410 in FIGS. 10A to 10C, the housing 520 in FIG. 11, or the housing 610 in FIG. 16), a circuit board (e.g., the circuit board 420 in FIG. 6, the circuit board 420 in FIG. 9, the circuit board 620 in FIG. 14, or the circuit board 820 in FIGS. 18A to 18B), an antenna (e.g., the antenna 430 in FIG. 6, the antenna 430 in FIG. 9, the antenna 630 in FIG. 14, or the antenna 830 in FIGS. 18A to 18B), or at least one processor (e.g., the processor 120 in FIG. 1 or the processor 440 in FIG. 6). The circuit board may be disposed inside the housing. The antenna may be disposed on the circuit board. The antenna may include a first antenna (e.g., the first antenna 431 in FIG. 6, the first antenna 431 in FIG. 9, the first antenna 631 in FIG. 14, or the first antenna 831 in FIGS. 18A to 18B), a second antenna (e.g., the second antenna 432 in FIG. 6, the second antenna 432 in FIG. 9, the second antenna 632 in FIG. 14, or the second antenna 832 in FIGS. 18A to 18B), or a third antenna (e.g., the third antenna 433 in FIG. 6, the third antenna 433 in FIG. 9, the third antenna 633 in FIG. 14, or the third antenna 833 in FIGS. 18A to 18B). The second antenna may be spaced by a first distance (e.g., the first distance L1 in FIG. 9, the first distance L1 in FIG. 14, or the first distance L1 in FIGS. 18A to 18B) apart from the first antenna. The third antenna may be spaced by a second distance (e.g., the second distance L2 in FIG. 9, the second distance L2 in FIG. 14, or the second distance L2 in FIG. 18B), which is greater than the first distance, apart from the first antenna. The at least one processor may be configured to obtain a plurality of first angle-of-arrival values defined as a direction of an external electronic device relative to the electronic device, based on two antennas among the first antenna, the second antenna, or the third antenna. The at least one processor may be configured to obtain one second angle-of-arrival value defined as a direction of the external electronic device relative to the electronic device, based on the remaining antenna. The at least one processor may be configured to identify a value, which is closest to the second angle-of-arrival value, among the plurality of first angle-of-arrival values, as an angle-of-arrival of the external electronic device.

According to an embodiment, the first distance may be equal to or less than half a wavelength of a frequency band supported by the antenna. The second distance may exceed half a wavelength of a frequency band supported by the antenna

According to an embodiment, the electronic device may further include a UWB communication module (e.g., the UWB communication module 190 in FIG. 1) electrically connected to the antenna.

According to an embodiment, the electronic device may further include a switching circuit (e.g., the switching circuit 450 in FIG. 9) configured to selectively connecting the UWB communication module to the second antenna or the third antenna.

According to an embodiment, the at least one processor may be configured to obtain the plurality of first angle-of-arrival values or the second angle-of-arrival value of the external electronic device relative to the electronic device, based on an AOA method (e.g., the AOA method described with reference to FIG. 2C).

Although the detailed description of this document has described specific embodiments, it will be apparent to those skilled in the art that various modifications may be made without departing from the scope of this document.

**Claims**

1. An electronic device (101) comprising:

   a housing (410);
   a circuit board (420, 620, or 820) disposed inside the housing;
   an antenna (430, 630, or 830) disposed on the circuit board and comprising a first antenna (431, 631, or 831), a second antenna (432, 632, or 832) spaced apart from the first antenna, and a third antenna (433, 633, or 833) spaced farther apart from the first antenna than the second antenna; and
   at least one processor (120 or 440),
   wherein the at least one processor is configured to:

      obtain a plurality of first angle-of-arrival values defined as a direction of an external electronic device relative to the electronic device, based on a first phase difference of arrival (first PDoA) of a signal of the external electronic device received through the first antenna and the third antenna;
      obtain a second angle-of-arrival value defined as a direction of the external electronic device relative to the electronic device, based on a second phase difference of arrival (second PDoA) of a signal of the external electronic device received through the first antenna and the second antenna; and
      identify a value, which is closest to the second angle-of-arrival value, among the plurality of first angle-of-arrival values, as an angle-of-arrival of the external electronic device.

2. The electronic device of claim 1,
   wherein the second antenna is disposed between the first antenna and the third antenna.

3. The electronic device of one of claims 1 to 2,

   wherein the first antenna and the second antenna are spaced apart by a first distance (L1), and
   wherein the first antenna and the third antenna are spaced apart by a second distance (L2) greater than the first distance.

4. The electronic device of one of claims 1 to 3,
   wherein the first distance is configured to be less than or equal to half a wavelength of a frequency band supported by the antenna.

5. The electronic device of one of claims 1 to 4,
   wherein the second distance is configured to be greater than half a wavelength of a frequency band supported by the antenna.

6. The electronic device of one of claims 1 to 5,

   wherein the housing (502) comprises a first housing (510) and a second housing (520) rotatably connected to the first housing, and
   wherein the circuit board comprises a first circuit board (621) disposed in the first housing and a second circuit board (622) disposed in the second housing.

7. The electronic device of one of claims 1 to 6,

   wherein the first antenna (631) and the second antenna (632) are disposed on the first circuit board, and
   wherein the third antenna (633) is disposed on the second circuit board.

8. The electronic device of one of claims 1 to 7,
   wherein the second distance is a distance between the first antenna and the third antenna when the first housing and the second housing are in an unfolded state.

9. The electronic device of one of claims 1 to 8,

   wherein the housing (700) comprises a second housing (702) and a first housing (701) configured to slide relative to the second housing, and
   wherein the circuit board (820) comprises a first circuit board (821) disposed in the second housing and a second circuit board (822) disposed in the first housing.

10. The electronic device of one of claims 1 to 9,

    wherein the first antenna (831) and the second antenna (832) are disposed on the first circuit board, and
    wherein the third antenna (833) is disposed on the second circuit board.

11. The electronic device of one of claims 1 to 10,
    wherein the second distance is a distance between the first antenna and the third antenna when the first housing is in a slide-out state relative to the second housing.

12. The electronic device of one of claims 1 to 11,
    wherein the first antenna, the second antenna, and the third antenna are disposed on substantially the same plane.

**13.** The electronic device of one of claims 1 to 12, wherein at least one of the first antenna, the second antenna, or the third antenna is a patch antenna.

**14.** The electronic device of one of claims 1 to 13, further comprising a UWB communication module (190) electrically connected to the antenna.

**15.** The electronic device of one of claims 1 to 14, further comprising a switching circuit (450) configured to selectively connecting the processor to the second antenna or the third antenna.

FIG. 1

EP 4 560 830 A1

FIG. 2A

FIG. 2B

FIG. 2C

FIG. 3

FIG. 4

FIG. 5

101

FIG. 6

START

IDENTIFY FIRST PDOA OF SIGNAL RECEIVED FROM EXTERNAL ELECTRONIC DEVICE THROUGH FIRST ANTENNA AND THIRD ANTENNA — P10

IDENTIFY MULTIPLE FIRST ANGLE-OF-ARRIVALS MATCHING FIRST PDOA FROM FIRST ANGLE-OF-ARRIVAL TABLE — P30

IDENTIFY SECOND PDOA OF SIGNAL RECEIVED FROM EXTERNAL ELECTRONIC DEVICE THROUGH FIRST ANTENNA AND SECOND ANTENNA — P50

IDENTIFY ONE SECOND ANGLE-OF-ARRIVAL MATCHING SECOND PDOA FROM SECOND ANGLE-OF-ARRIVAL TABLE — P70

IDENTIFY, AS ANGLE-OF-ARRIVAL OF EXTERNAL ELECTRONIC DEVICE, FIRST ANGLE-OF-ARRIVAL CLOSEST TO SECOND ANGLE-OF-ARRIVAL FROM AMONG MULTIPLE FIRST ANGLE-OF-ARRIVALS — P90

END

FIG. 7

FIG. 8A

FIG. 8B

FIG. 9

FIG. 10A

101

FIG. 10B

FIG. 10C

101

510c

510a

510

A

520

532

520c

520a

504    530

510

531

533

A

520

510

508

510

520

506    534

510b

631

632

633

520

520b

502 { 510
       520

+Y

-X ←——→ +X

-Y

630 { 631
      632
      633

# FIG. 11

101

506  510  534

510

520

510

508

510b

540  540

520b

520

510  520

520

540

540

# FIG. 12

101
514
530
524
512
522
580-1
542
580-2
540
552
554
562
564
570

+Z
-X +Y
-Y +X
-Z

526
516

580 { 580-1
        580-2

550 { 552
        554

560 { 562
        564

520 { 522        510 { 512
        524               514
        526               516

FIG. 13

FIG. 14

FIG. 15

FIG. 16

FIG. 17

FIG. 18A

FIG. 18B

## INTERNATIONAL SEARCH REPORT

| | International application No. |
|---|---|
| | **PCT/KR2023/009822** |

| **A.** | **CLASSIFICATION OF SUBJECT MATTER** |
|---|---|

**H01Q 1/38**(2006.01)i; **H01Q 1/24**(2006.01)i; **H01Q 5/25**(2015.01)i

According to International Patent Classification (IPC) or to both national classification and IPC

| **B.** | **FIELDS SEARCHED** |
|---|---|

Minimum documentation searched (classification system followed by classification symbols)

H01Q 1/38(2006.01); G01S 3/04(2006.01); G01S 3/46(2006.01); G01S 3/48(2006.01); H01Q 9/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도래각(angle of arrival), 도달 위상 차이(phase difference of arrival, PDoA), 안테나 (antenna), 간격(gap)

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| Y | KR 10-2021-0141116 A (SAMSUNG ELECTRONICS CO., LTD.) 23 November 2021 (2021-11-23)<br>See paragraphs [0044], [0078] and [0136]-[0148], claim 1 and figures 2a-10. | 1-3 |
| Y | KR 10-1170723 B1 (LIG NEX1 CO., LTD.) 02 August 2012 (2012-08-02)<br>See paragraphs [0027]-[0028], claims 1-2 and figures 1-5. | 1-3 |
| A | KR 10-2022-0022606 A (SAMSUNG ELECTRONICS CO., LTD.) 28 February 2022 (2022-02-28)<br>See claims 1-15 and figures 2-19. | 1-3 |
| A | US 2013-0271323 A1 (ELECTRONICS AND TELECOMMUNICATIONS RESEARCH INSTITUTE) 17 October 2013 (2013-10-17)<br>See claims 1-8 and figures 1-9. | 1-3 |
| A | US 2019-0346533 A1 (RAYTHEON COMPANY) 14 November 2019 (2019-11-14)<br>See claims 1-8 and figures 1-7B. | 1-3 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 October 2023** | **18 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/009822**

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☑ Claims Nos.: **4-15**
because they are dependent claims and are not drafted in accordance with the second and third sentences of Rule 6.4(a).

Form PCT/ISA/210 (continuation of first sheet) (July 2022)

# EP 4 560 830 A1

| INTERNATIONAL SEARCH REPORT<br>Information on patent family members | | International application No.<br>**PCT/KR2023/009822** | |

| Patent document<br>cited in search report | | | Publication date<br>(day/month/year) | Patent family member(s) | | | Publication date<br>(day/month/year) |
|---|---|---|---|---|---|---|---|
| KR | 10-2021-0141116 | A | 23 November 2021 | US | 2021-0356550 | A1 | 18 November 2021 |
| | | | | WO | 2021-230682 | A1 | 18 November 2021 |
| KR | 10-1170723 | B1 | 02 August 2012 | KR | 10-1170724 | B1 | 02 August 2012 |
| KR | 10-2022-0022606 | A | 28 February 2022 | WO | 2022-039410 | A1 | 24 February 2022 |
| US | 2013-0271323 | A1 | 17 October 2013 | KR | 10-2013-0117664 | A | 28 October 2013 |
| US | 2019-0346533 | A1 | 14 November 2019 | AU | 2019-317251 | A1 | 23 July 2020 |
| | | | | AU | 2019-317251 | B2 | 01 April 2021 |
| | | | | EP | 3794365 | A2 | 24 March 2021 |
| | | | | IL | 276336 | A | 30 September 2020 |
| | | | | IL | 276336 | B | 28 February 2021 |
| | | | | TW | 201947251 | A | 16 December 2019 |
| | | | | TW | I727287 | B | 11 May 2021 |
| | | | | US | 10705177 | B2 | 07 July 2020 |
| | | | | WO | 2020-033006 | A2 | 13 February 2020 |
| | | | | WO | 2020-033006 | A3 | 25 June 2020 |

Form PCT/ISA/210 (patent family annex) (July 2022)